# EUROPEAN PATENT APPLICATION

(11) **EP 4 841 395 A1**
(43) Date of publication of application: **18.11.2026**
(21) Application number: 24916018.5
(22) Date of filing: 11.01.2024
(51) Int. Cl.: G06F 3/01

(54) **METHOD AND SYSTEM FOR DETECTING USER BEHAVIOR AND EXTERNAL ENVIRONMENT CHANGE BY USING CAPACITIVE SENSING PRINCIPLE**

(71) Applicant: Yang, Chang Ming, Taiwan 350001 (TW)
(72) Inventor: Yang, Chang Ming, Taiwan 350001 (TW)
(74) Representative: Mewburn Ellis LLP
(86) International application number: PCT/CN2024/071717
(87) International publication number: WO 2025/147941

(57) **Abstract**

The present invention relates to a capacitive-sensing-based multi-entity physical interaction state detection system and method for detecting user behavior, multi-entity physical interaction states, interaction states between an entity or a related article and an external environment, and external environmental changes. The system includes a plurality of conductive regions, at least one sensing circuit, and at least one processing module. The plurality of conductive regions are disposed on a first entity, a second entity, or a related article to form a capacitive coupling relationship, wherein the first entity or the second entity may include a human body, a part of a human body, an animal, a robot, another article, or a combination thereof.

The sensing circuit obtains capacitance data. The processing module detects, according to temporal changes, spatial distribution, regional differences, time correspondence, or combinations thereof of the capacitance data, a physical interaction state between entities, between an entity and a related article, between a related article and an external environment, or between an entity and an external environment. The physical interaction state may include an interaction state formed by applied force, received force, action and reaction force, contact, proximity, relative displacement, deformation, friction, vibration, or combinations thereof. The processing module may further analyze, distinguish, compensate for, or correct background capacitance variation caused by external environmental factors, thereby improving detection stability.

The processing module may also control sensing-mode selection, system startup, system stop, power-saving control, or function switching according to a comparison result between the capacitance data and a preset value, preset range, or preset condition.

## Description

### TECHNICAL FIELD

The present invention relates to capacitive sensing technology and, more particularly, to a system and method that use a plurality of conductive regions and at least one reference ground, reference point, or reference electrode to obtain capacitance data. The capacitance data may be analyzed based on temporal changes, spatial distribution, regional differences, time correspondence, background capacitance variation, or combinations thereof, thereby detecting a physical interaction state among a first entity, a second entity, a related article, and an external environment, as well as user behavior and external environmental changes.

### BACKGROUND ART

Conventional capacitive sensing technologies often rely on a single sensing point or a single variation amount as a basis for determination. Such approaches may provide useful sensing information in certain contact, proximity, or position-change scenarios. However, when multi-region interaction, posture variation, force variation, distance variation, ground-surface material variation, humidity variation, or other external environmental variation exists between a human body and an article, between articles, between an entity and an external environment, or between a related article and an external environment, a single data source may not provide a sufficiently stable and consistent basis for determination.

In addition, capacitance data obtained from different conductive regions may simultaneously be affected by human-body coupling, common background factors, external environmental changes, or changes in measurement state. If only data from a single region is observed, without considering temporal changes, spatial distribution, regional differences, time correspondence, or background capacitance variations among multiple conductive regions, it may be difficult in some circumstances to distinguish changes caused by different sources.

Accordingly, there remains a need for a capacitive sensing system and method capable of comprehensively analyzing capacitance data from multiple conductive regions and, when necessary, analyzing, distinguishing, compensating for, or correcting background capacitance variations caused by external environmental factors, so as to provide a determination basis for multi-entity physical interaction states, interaction states between an entity or related article and an external environment, and external environmental changes.

### Further background disclosure

From birth to old age, a person interacts with articles every day. Therefore, capacitive sensing between articles and a person, or between one article and another article, is used to detect and analyze user behavior and changes in the external environment. Based on the principle of the previous Chinese Patent CN102300499B, which relates to a method and system for generating physiological signals using a fabric capacitive sensor, data generated by capacitive sensing between an article and a person can be further analyzed to detect physiological parameters of a user, including respiration, swallowing, coughing, posture, perspiration, heartbeat, pulsation, and body temperature. Changes in dielectric constant caused by capacitance variation between a conductive cloth and the skin may also be used to detect sweating, a wound, perspiration, application of medicine, or makeup. U.S. Patent Application Publication US20200107779A1 also describes a multifunctional fabric sensing system, method, and object in which human skin functions together with electrodes and transmission lines to interact with the external environment. The present invention is directed to detecting capacitance changes with an article or the environment. U.S. Patent US8961439B2, relating to a system and method for analyzing gait using textile sensing, uses pressure sensors in socks to detect gait. In the present invention, the pressure sensing is performed by capacitive sensing. U.S. Patent US11311197B2, relating to products, methods, and systems for monitoring physiological functions and posture, uses a button to connect information from materials separated on two sides, such as a connection between clothing and trousers, so that a controller may be provided only on the clothing. That patent also detects posture and physiological information. The present patent is based on capacitive sensing. U.S. Patent US11253203B2, relating to an object, method, and system for detecting heartbeat or whether an electrode is properly contacting, states that electrocardiographic signals can be detected when the capacitance value between two electrode sheets is 10 nF. Under capacitive sensing, the system may be switched to detect electrocardiogram, electromyogram, body fat, brain waves, and respiration. By using these articles to measure capacitance variation data of a user, user behavior and changes in the external environment can be detected more easily and accurately. The present invention measures a resonance frequency caused by interaction between electrodes of an article and a human body to measure "changes" produced by human "activities," thereby detecting and analyzing behavior. The present invention also uses capacitive sensing between an article electrode and the environment to analyze a user behavior pattern. In previous capacitive sensing, a database may be formed. The articles described in the present invention include articles contacted by a human body, such as clothing, hats, trousers, masks, socks, shoes, bed sheets, pillows, gloves, glasses, watches, bracelets, backpacks, handbags, luggage, shopping baskets, tote bags, snowboards, ice skates, surfboards, sports equipment, toothbrushes, cigarettes, pens, computers, mobile phones, cars, balls, tires, steering wheels, crutches, tablecloths, chairs, carpets, slippers, insoles, safety belts, or artificial products including robots, prosthetic limbs, artificial eyes, and artificial ears. Daily life involves interactions with these articles, and therefore data relating to interaction between articles and people can be obtained to generate a database.

Three key models covering behavior are provided: (1) data science dedicated to obtaining raw capacitance data; (2) identifying motions and activities from the raw data; and (3) establishing, tracking, and managing health behavior patterns to construct a health behavior guidance platform.

Capacitive sensing between articles and a person can be used to complete analysis and management of a user behavior pattern. In the present invention, capacitance sensing data obtained from different articles sensing the user at the same time can more completely detect and process behavior pattern analysis. For example, clothing having a controller can detect posture changes, and a controller on a chair can also detect the posture of the human body. This makes behavior pattern analysis more accurate and can provide more information, such as the weight of a person sitting on a chair, whether the person is leaning against a chair back, whether a safety belt is fastened while driving, whether the respiration measured by the safety belt has the same waveform as the respiration measured by clothing, whether a hand is placed on an armrest of the chair, whether the buttocks are sitting upright or with legs crossed, whether the person is sitting in the center of the chair or to one side, whether the timing of sitting down is the same, whether the head is against a headrest, and whether the hands are gripping a steering wheel. Capacitance sensed at the elbows and arms on the clothing can be used simultaneously for calibration. In addition, whether the safety belt is fastened on the trousers, whether the feet are placed on the pedals, accelerator pedal, or brake pedal, whether the hand opens or closes a car door, and whether the left and right rear-view mirrors inside the car are adjusted can all be compared with sensed capacitances from the clothing, shoes or socks, and trousers. That is, the in-vehicle capacitive sensing system and the sensing of the body, clothing, socks, and shoes can be analyzed together to determine the user behavior pattern.

In addition, conductive electrodes and transmission lines may be provided on body skin, and can generate capacitive sensing with external articles. Such data can further be used to measure behavior pattern analysis and processing. In particular, when the electrodes are on the skin, the data can be used to calibrate a behavior database between an article and a person. Skin transmission lines may transmit sensed data to an external processor or a mobile phone. There may also be capacitive sensing between articles of different persons. For example, when two persons interact and one person places a hand around the waist or on the shoulder of the other person, the capacitive sensing value between the clothing and trousers of the two persons will be different. When the two persons approach each other, the clothing will also have a capacitive sensing effect. Therefore, interaction between the two persons can be detected, thereby obtaining more information for behavior pattern analysis and processing. Similarly, when sleeping on a bed, capacitance sensing of the bed can be compared with capacitance sensing of pajamas and trousers, and the databases may be mutually calibrated. The system may also be used when a person sleeps without wearing clothing or trousers.

In addition, the conductive material on a user's article may not have a capacitive sensing relationship with the person, but may instead have a capacitive sensing relationship with another article or the environment. The most important example is a shoe sole, especially the capacitive sensing change between the shoe sole and the ground or a ball. In other words, although the article is connected with the human body, it does not have a capacitive sensing function with the person. The article has a conductive region and therefore has capacitive sensing with another article. For example, if the shoe sole has two parallel conductive regions, gait analysis of the user can be measured. Different ground surface materials can also produce different capacitance changes, and therefore the material of the ground surface can be determined. There is also an interaction relationship with a soccer ball based on the same principle, so that it is possible to detect which location of the shoe sole or upper contacts the soccer ball and applies force. In the same manner, when a person is in a car, on a motorcycle, or on a bicycle, the wheel acts as the shoe. Finally, if a conductive region is provided on the ground, it can be detected whether a user has walked over it. For example, a floor or carpet at home may have multiple conductive regions, thereby determining whether the user has walked over it, whether the user is wearing shoes, wearing socks, or walking barefoot. Similarly, conductive regions may be provided on roads, in companies, department stores, and other places. In this case, the article contacted by the person is the floor, road, grass, or carpet.

In the above situations, changes in temperature, pressure, material, and humidity between an article and a person or between one article and another article will all produce capacitance changes. Thus, changes in the human body and environment can be known. For example, an air-conditioned environment and sunlight irradiation are different. In summary, capacitance changes can be detected by a capacitive sensing method for an article that contacts the human body and has a conductive region, or for articles that do not contact the human body but have conductive regions and interact with other non-contacting articles. Raw capacitance data are thereby obtained. Motions and activities are identified from the raw data. Then health behavior patterns are established, tracked, and managed, thereby constructing a health behavior guidance platform.

### SUMMARY OF THE INVENTION

The present invention is applicable not only to detecting physical interaction states among multiple entities, but also to detecting interaction states between an entity or related article and an external environment and to detecting external environmental changes. In some embodiments, background capacitance variation caused by external environmental factors may be analyzed, distinguished, compensated for, corrected, or reduced. In some embodiments, the first entity or the second entity may be a human body, a part of a human body, an animal, a robot, another article, or a combination thereof. Accordingly, the present invention is not limited to capacitive sensing between a human body and a wearable article, and may also be used for physical interaction-state detection and external environmental-change detection involving animals, robots, related articles, and external environments.

In one aspect, a multi-entity physical interaction state detection system based on capacitive sensing is provided. The system is configured to detect a physical interaction state between a first entity and a second entity, between an entity and a related article, and between an entity or related article and an external environment. Compared with approaches that rely only on a single sensing point or a single variation amount, the system analyzes capacitance data corresponding to a plurality of conductive regions, including temporal changes, spatial distribution, regional differences, time correspondence, or combinations thereof, and may further analyze background capacitance variation, thereby providing a determination basis for a physical interaction state and an external environmental change.

In some embodiments, the processing module may simultaneously consider capacitance data from a plurality of conductive regions in terms of temporal changes, spatial distribution, regional differences, time correspondence, synchronization relationships, or combinations thereof, to form a basis for determining a physical interaction state and external environmental change among the first entity, the second entity, the related article, and the external environment. The processing module may further analyze, distinguish, compensate for, or correct background capacitance variation.

In some embodiments, the processing module analyzes temporal features of capacitance data from the plurality of conductive regions, including a change direction, change order, duration, relative delay, degree of synchronization, waveform smoothness, waveform fluctuation degree, response characteristics, or combinations thereof. These features may characterize temporal features, time-correspondence features, dynamic-variation features, force-variation features, or interaction-response features of the physical interaction state.

In some embodiments, the processing module analyzes spatial distribution, displacement paths, correspondence among regions, or combinations thereof based on capacitance-data variation among a plurality of conductive regions, thereby reflecting a linked movement pattern or position change during a physical interaction process.

In some embodiments, when capacitance data from at least two conductive regions presents the same or similar change direction, change trend, duration, relative delay, synchronization degree, temporal correlation, or common signal drift, such information may serve as one reference basis for determining an external environmental change or a common background factor.

In some embodiments, the plurality of conductive regions includes at least one first conductive region and at least one second conductive region. The first conductive region is more susceptible to capacitive coupling with a human body or first entity, while the second conductive region is less susceptible and provides background comparison information. The processing module may compare capacitance data from the plurality of conductive regions, obtain the background comparison information, and dynamically compensate for or actively filter out background capacitance interference, so as to distinguish a change related to the human body or first entity from a change related to a background factor.

In some embodiments, the system includes a plurality of candidate reference electrodes. Based on measurement requirements, signal state, reference stability, or combinations thereof, one candidate reference electrode may be selected as a measurement reference, or the system may switch to another reference electrode.

In some embodiments, the system further includes at least one auxiliary sensing device, such as an acceleration sensor, a nine-axis inertial sensor, a camera, a GPS positioning system, an inductive sensing structure, or a corresponding sensing circuit. Data generated by such devices may be used together with the capacitance data or a determination result for auxiliary determination, comparison, or correction.

### DEFINITIONS AND INTERPRETIVE TERMS

**First Entity:** As used herein, a "first entity" refers to an object capable of forming or participating in a capacitive sensing relationship, and may be a human body, a part of a human body, an animal, a robot, a wearable article, a general article, an environmental object, another article, or a combination thereof.

**Second Entity:** As used herein, a "second entity" refers to another object that forms or participates in a capacitive sensing relationship relative to the first entity, and may be a human body, a part of a human body, an animal, a robot, a wearable article, a general article, a corresponding object in an environment, another article, or a combination thereof.

**Related Article:** As used herein, a "related article" refers to an article that contacts, is used in cooperation with, or is associated with interaction with the first entity or the second entity, such as a wearable article, footwear, bedding, vehicle interior component, sports equipment, ground-contacting article, or a combination thereof. The listed examples are illustrative and not limiting.

**Ground-Contacting Article / Moving Member / Support Member:** A ground-contacting article, moving member, or support member may be an article, component, or part capable of forming a contact, proximity, support, load-bearing, movement, or force relationship with a ground surface, floor, road, grass, carpet, or other external environment, and capable of forming a capacitive coupling relationship or capacitive measurement relationship with the external environment through a conductive region. Examples include a shoe sole, shoe upper, insole, sock, wheel, tire, artificial foot, ground-contacting end of a prosthetic component, robot component configured to contact, support on, or move along a ground surface, support base, or combinations thereof.

**Vehicle Occupant:** A "vehicle occupant" refers to a person located within an interior space of a vehicle and capable of forming a contact, proximity, support, sitting, operation, or other physical interaction relationship with a vehicle interior article, wearable article, seat, seat back, seat cushion, seat belt, steering wheel, pedal, door, or other vehicle component. The vehicle occupant may include a user, driver, passenger, or combinations thereof.

**Physical Interaction State:** A "physical interaction state" refers to a physical interaction condition between a first entity and a second entity, between an entity and a related article, between related articles, or between an entity or a related article and an external environment, as reflected by capacitance data. The physical interaction state may include contact, proximity, separation, posture change, force change, applied force, received force, action and reaction force, relative displacement, deformation, friction, vibration, or combinations thereof.

**Plurality of Conductive Regions:** A "plurality of conductive regions" refers to conductive portions disposed on the first entity, second entity, related article, or combinations thereof. The conductive regions may correspond to different positions, regions, or functions to form or reflect corresponding capacitance data.

**Reference Electrode:** A "reference electrode" refers to a conductive structure used as a reference in a capacitance measurement process. In some embodiments, the system has a plurality of candidate reference electrodes and may select one candidate as a measurement reference or switch to another reference electrode based on measurement requirements, signal state, reference stability, or combinations thereof.

**Common Background Factor:** A "common background factor" refers to a common source factor that may simultaneously affect capacitance data of at least two conductive regions, including external environmental variation, common signal drift, or another common variation not caused by a specific single contact event.

**Background Comparison Information:** "Background comparison information" refers to information provided by one or more conductive regions of the plurality of conductive regions that are less affected by capacitive coupling with the human body or first entity, and usable for comparison with capacitance data from other conductive regions of the plurality of conductive regions. The background comparison information may be used by the processing module to dynamically compensate for, actively filter out, correct, reduce, suppress, or distinguish background capacitance interference caused by an external environmental change or common background factor, thereby distinguishing a change related to the human body or first entity from a change related to the background factor.

**Sensing-Configuration Abnormality or Contact-State Change:** A "sensing-configuration abnormality or contact-state change" refers to a measurement-state or sensing-state change reflected by an unexpected capacitance change, nonlinear change, abnormal regional difference, abnormal time correspondence, or combinations thereof. Such information may serve as one basis for determination and is not limited to a specific fault type.

**Processing Module / Configured To:** As used herein, a processing module that is described as being "configured to" perform a recited function may include one or more processors, microcontrollers, controllers, sensing integrated circuits, signal-conditioning circuits, switching circuits, field-programmable gate arrays, application-specific integrated circuits, memory storing executable instructions, lookup tables, calibration data, rule-based logic, threshold comparison logic, statistical models, machine-learning models, or combinations thereof. The corresponding operations may include acquiring capacitance data from the sensing circuit, filtering or smoothing the capacitance data, comparing the capacitance data with a preset value, preset range, preset condition, historical data, corresponding-region data, symmetric-region data, or background comparison information, selecting or switching a measurement reference, determining temporal changes, time correspondence, synchronization relationships, relative delays, regional differences, and generating a determination result. Such structural and algorithmic examples provide support for the recited configured-to functions and are not intended to limit the invention to a particular processor type, circuit topology, or software implementation.

### BRIEF DESCRIPTION OF THE DRAWINGS

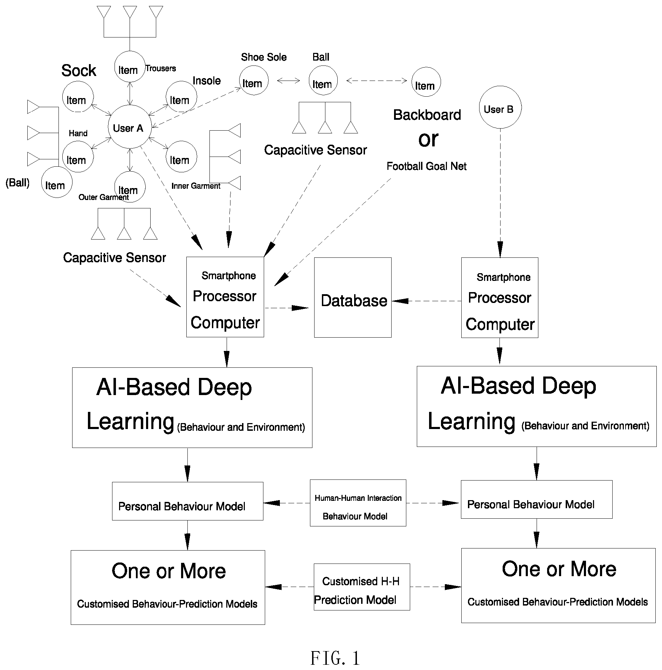

FIG. 1 is a schematic architectural diagram of a multi-entity physical interaction state detection system according to one embodiment, illustrating correspondence among a first entity, a second entity, related articles, an operation portion, a shoe sole, a ball, an external environment, conductive material regions, capacitive sensing nodes, a processor or processing module, a database, and a subsequent analysis module, and further illustrating physical interaction relationships, capacitive coupling relationships, capacitive measurement relationships, and data-analysis flow among different objects. In FIG. 1, reference sign KK consistently denotes a capacitive sensing node, reference signs OO and QQ denote a processor, processing module, or corresponding data-processing function, and reference sign RR denotes a behavior-and-environment analysis module, an AI-based deep-learning module, or a subsequent analysis module.
FIG. 2 shows abdominal respiratory signal waveforms in supine, right-side lying, and left-side lying positions.
FIG. 3 shows a comparison of chest and abdominal respiratory signal waveforms in supine, right-side lying, and left-side lying positions.
FIG. 4 shows a signal waveform in which sportswear closely fits the body, resulting in a larger sensed capacitance value for respiration.
FIG. 5 shows a signal waveform in which sensed respiratory capacitance increases as sweating occurs during user movement.

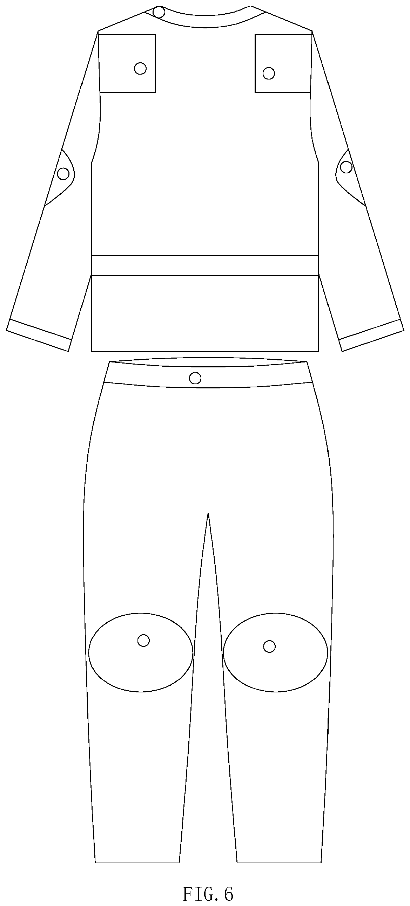

FIG. 6 is an external schematic view of multi-point capacitive smart clothing.
FIG. 7 is a waveform diagram of bilateral elbow movement, showing that left and right elbow waveforms are similar but have different values, which may indicate different force levels or different arm dimensions.
FIG. 8 is a waveform diagram of bilateral knee movement, showing that the two knees may differ not only in force, but also in timing and duration of force application.
FIG. 9 is a waveform diagram of bilateral hip movement.
FIG. 10 is a waveform diagram of arm and hip movement.
FIG. 11 is a waveform diagram of arm and knee movement.
FIG. 12 is a waveform diagram of stirrup-pants foot-stepping movement, showing different timing of left and right foot-stepping actions.
FIG. 13 shows synchronized chest and abdominal waveforms obtained when a young subject walks at different speeds.
FIG. 14 shows that the measurement presents a high degree of consistency, with a correlation coefficient of approximately 0.989.
FIG. 15 is a waveform diagram in a walking state.
FIG. 16 is a waveform diagram in a running state.
FIG. 17 is a waveform diagram of an outer conductive electrode in an insole.
FIG. 18 is a waveform diagram of forward and backward swinging of both arms.
FIG. 19 is a waveform diagram of forward and backward swinging of both thighs.
FIG. 20 is a circuit schematic diagram for reference-electrode switching.

### DETAILED DESCRIPTION OF EMBODIMENTS

The following description, together with the drawings and examples, explains embodiments of the capacitive sensing system and method. The embodiments are illustrative of the technical content of the disclosure and are not intended to limit the scope of the invention.

As used herein, a "capacitive relationship" refers to one or more capacitive coupling relationships, capacitive measurement relationships, capacitance-value variations, or combinations thereof formed among a first entity, a second entity, a related article, an external environment, or combinations thereof. In some embodiments, the capacitive relationship may include background capacitance variation caused by external environmental factors.

As shown in FIG. 1, conductive material regions disposed on the first entity, second entity, related article, or external environment form capacitive relationships so that capacitance variation generated among these objects can be obtained. Based on the capacitance data, the system may analyze temporal changes, spatial distribution, regional differences, time correspondence, synchronization relationships, phase relationships, common background variation, or combinations thereof, to determine physical interaction states among the objects. The capacitance data, determination results, or feature data may be provided to a database, intelligent platform, or artificial-intelligence model for subsequent analysis, recognition, model building, model updating, or prediction.

In FIG. 1, person A may serve as the first entity and person B may serve as the second entity. Each of the first entity and the second entity may include a human body, part of a human body, an animal, a robot, another article, or combinations thereof. BB represents a related article and is illustrated by the symbol "article" without limiting the kind of article. A related article may include a sock, pants, outer garment, inner garment, insole, shoe sole, ball, basketball board, soccer goal net, furniture, sports equipment, vehicle tire, seat, prosthetic component, robot component, or another related article.

CC represents an operation portion, such as a human hand. In different embodiments, the operation portion may include a human hand, prosthetic limb, mechanical hand, robot end effector, or a component having contact, grasping, operating, or supporting functionality. When CC and BB are indicated together, the operation portion is physically interacting with the related article, such as by grasping, holding, supporting, carrying, pushing, pulling, pressing, or operating.

The triangle symbols in FIG. 1 represent at least one conductive material region, which may also be referred to as a conductive region, conductive electrode, sensing electrode, or electrode region. The conductive material region may be disposed on the first entity, second entity, related article, or external environment, and may function as a conductive region for capacitance measurement to form at least one capacitive sensing node.

KK represents a capacitive sensing node formed by at least one conductive material region and a human body, another conductive material region, a related article, or an external environment. When distance, contact state, force, tensile force, torsion, tension, dielectric constant, relative position, or external environmental condition changes, the resulting capacitance value changes. The external environmental condition may include temperature, humidity, ground-surface material, ground-surface dielectric property, environmental proximity state, or another environmental factor capable of affecting the capacitive relationship. The capacitance variation may be converted by a measurement circuit into a frequency, period, voltage, or current signal, and then acquired and analyzed by a processor to determine physical interaction state and environment-related information.

OO and QQ represent a processor, processing module, or corresponding data-processing function. The processor or processing module may acquire, compare, filter, compensate, correct, classify, infer, or otherwise process the capacitance data and may output a determination result corresponding to a physical interaction state, an external environmental change, or combinations thereof. RR represents a behavior-and-environment analysis module, an AI-based deep-learning module, a database-related module, or a subsequent analysis module that may perform behavior and environment analysis, recognition, model building, model updating, or prediction based on capacitance data, background capacitance variation, feature data, or determination results.

For example, a sock worn on the foot of the first entity may form a direct-contact or fitted-contact relationship with the foot. The relationship may vary with contact area, pressure, humidity, relative sliding, or wearing state between the foot and the sock, and may be used to analyze gait, foot force, wearing fit, or related background variation. An insole or shoe sole may be separated from the foot by a sock, shoe interior space, or shoe material. Therefore, capacitance data obtained from the sock may more directly reflect foot motion or force, whereas capacitance data obtained from the insole or shoe sole may exhibit relative delay, phase difference, synchronization difference, or incomplete-contact variation.

An operation portion such as a hand and a ball may be shown as directly adjacent to illustrate a clear physical interaction state, such as grasping, holding, supporting, pressing, wrapping, operating, or applying force. In some embodiments, a ball may include a conductive region. Gripping force, contact area, force variation, or relative position variation between the operation portion and the ball may be reflected in corresponding capacitance data and used by the processor to determine ball-holding state, operation state, or force state of the related article.

A stacked capacitive relationship may also be formed between the first entity and an inner garment, and between the inner garment and an outer garment. Although the first entity and inner garment may be close to or adjacent to each other, body movement, respiration, garment elasticity, air gap, or tightness may cause capacitance variation. When an outer garment is located outside the inner garment, capacitance data obtained by the outer garment may be affected by body deformation of the first entity, relative movement of the inner garment, air-gap variation between the two garment layers, and external environmental factors.

In one embodiment, the inner garment more directly reflects respiration, muscle contraction, or local body deformation adjacent to the body, whereas the outer garment reflects larger-range garment displacement, posture variation, stacked air-gap variation, or external environmental influence. The processor may compare capacitance data obtained from the inner garment and the outer garment to analyze time correspondence, synchronization relationship, relative delay, regional difference, or common background variation, and may use one as a correction, comparison, validation, or compensation reference for the other.

The shoe sole may be a related article worn or used by the first entity. In addition to forming a wearing relationship with the first entity, the shoe sole may form a capacitive relationship with a ground surface, floor, grass, road, carpet, or other external environment. When the first entity walks, runs, stands, jumps, or changes force-application state, the distance, contact area, pressure, dielectric constant, ground-surface material, or humidity between the shoe sole and the external environment changes, thereby causing corresponding capacitance variation. The processor may analyze gait, force distribution, ground-surface material, or environmental variation based on such capacitance data.

In another embodiment, a ball may form an article-to-article interaction with a shoe sole, for example during kicking, stepping on, controlling, or positioning the ball near a shoe upper or shoe sole. The ball may also be a related article forming a capacitive relationship with an external environment. After the ball is grasped, thrown, struck, kicked, stepped on, or controlled, conductive regions on or in the ball may form capacitive relationships with surrounding air, a ground surface, a court surface, a basketball board, a soccer goal net, or another environmental object. The capacitance data may change with distance, speed, contact state, force, dielectric constant, environmental humidity, ground-surface material, or spatial position.

In some embodiments, the first entity and the second entity may respectively be a human body, part of a human body, another user, an animal, a robot, an article, an environmental object, or a combination thereof. The related article may be an article that contacts, is proximate to, is worn by, supports, carries, is used in cooperation with, or interacts with the first entity or second entity. The external environment may include a ground surface, carpet, road surface, vehicle interior environment, indoor environment, sports environment, or an environment surrounding the related article.

A conductive region may be disposed on a human body, human skin, wearable article, non-body-fitted article, sports equipment, vehicle component, household article, ground-contacting article, or combinations thereof. The conductive region may include conductive fabric, a conductive material region, conductive pattern, conductive patch, conductive electrode sheet, conductive wire, or combinations thereof. The capacitance data may be data corresponding to capacitance variation between at least one conductive region and a human body, part of a human body, another conductive region, another article, a reference ground, reference point, reference electrode, or external environment due to variation in distance, contact, pressure, tensile force, torsion, tension, deformation, temperature, humidity, or dielectric constant.

At least one first conductive region and at least one second conductive region may produce different capacitive coupling response characteristics under the same or similar physical interaction state due to different positions, areas, structures, distances from a human body or article, or combinations thereof. The different response characteristics may be represented by differences in capacitance variation amount, change direction, change speed, change order, duration, relative delay, synchronization degree, periodic-change feature, or combinations thereof.

The processing module may establish a correspondence between capacitance data and physical interaction state based on capacitance data obtained at the same time or at corresponding times from a plurality of conductive regions, a plurality of articles, vehicle interior articles, wearable articles, reference-ground positions, or corresponding regions. The correspondence may be used for assisting physical-interaction-state determination, sensing correction, measurement-reference selection, contact-state determination, force-state determination, or environment-state determination.

In some embodiments, a reference ground, reference point, or reference electrode may be formed by a conductive region disposed at a stable-contact position of a human body, a garment, pants, sock, shoe, seat, seat back, seat cushion, bed, back, waist, thigh, calf, foot, neck, arm, elbow, shoulder, hip, or near a sensing point. The processing module or sensing circuit may select one of the reference structures as a current measurement reference based on contact state, signal quality, signal state, capacitive coupling state, or reference stability.

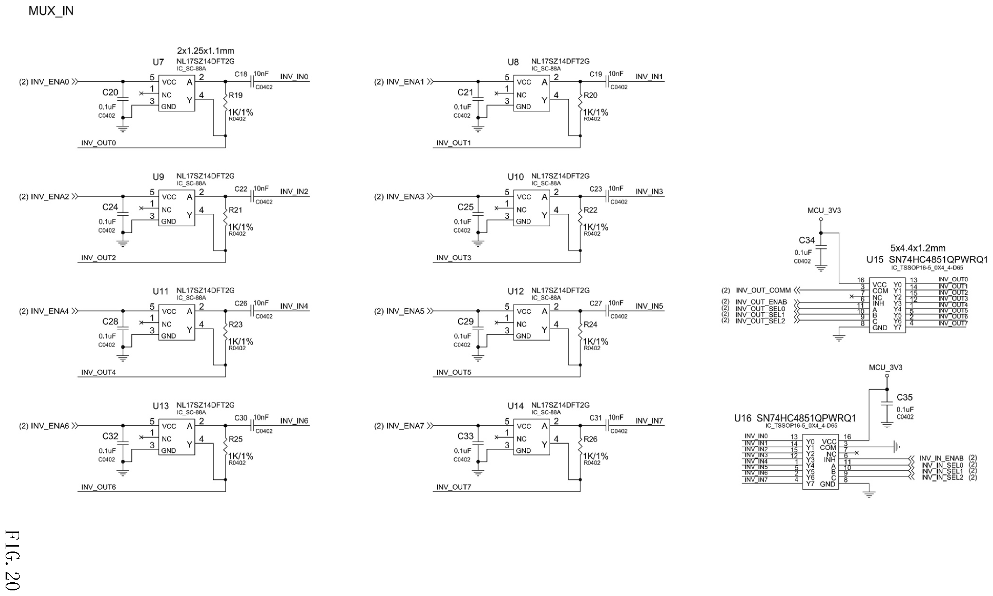

FIG. 20 illustrates a circuit design for reselecting another reference electrode from other electrode sheets or conductive regions as a current measurement reference when the contact state, coupling state, or measurement state between a current reference electrode and a body or another article is unstable. This mechanism can reduce measurement instability caused by body movement, wearing displacement, article movement, contact-position change, or poor reference-point contact, and may be applied to garments, footwear, seats, vehicle interior articles, sports equipment, robots, artificial products, or other related articles.

### General Capacitive Structure and Measurement Circuit

In a preferred embodiment, the multi-entity interaction sensing system and method include at least one article, a plurality of conductive regions disposed on the article or on the body, and a circuit for providing a signal. At least one conductive region of the article and the body, another article, or the environment form a capacitive sensing structure. Alternatively, a conductive region of the body and an article or the environment form a capacitive sensing structure. The capacitive sensing structure may be coupled in series or in parallel with a resistor R, a capacitor C, an inductor L, an operational amplifier, a diode, a CMOS device, a transistor, or an integrated circuit to form a charging circuit or a discharging circuit, thereby changing a frequency, period, voltage, or current signal range. In one specific embodiment, a Schmitt trigger may also be connected in series or in parallel for signal shaping.

When a dielectric constant, a distance, a pressure, a pulling force, a torsional force, or a tension changes between an article and the body, between one article and another article, between an article and the external environment, or between a body electrode and an article or environment, a capacitance value changes. The sensing circuit outputs a signal corresponding to the capacitance change, and the system receives and measures the capacitance change, represented for example by frequency, period, voltage, or current variation. The measured change may be used to determine a physical interaction state among entities, including a body physiological change, posture change, contact between entities, or medium change.

### Respiration, Sleep, Posture, and Multi-Point Garment Examples

In one embodiment, a wearable capacitive sensing garment made from conductive silver fabric continuously measures respiratory signals in different scenarios including sleep, work, and exercise. The sensing elements are integrated into the garment, so the wearer does not need to wear an additional device. Respiratory frequency and amplitude can be measured continuously, and the garment may be used for long-term monitoring of respiratory-related physiological states.

During sleep, pajamas are preferably comfortable and may be one size larger. Therefore, capacitance values may differ between supine and side-lying postures. The measured capacitance value may be very small because direct skin contact is not required. When a blanket is covered over the body, the capacitance value may increase. In the prone position, the value may remain substantially unchanged. When the person is asleep, the waveform tends to be stable; otherwise, small movements while awake may generate noise. The system can therefore be used to evaluate sleep quality and may also provide respiratory-rate variability (RRV) information that reflects parasympathetic nervous system response.

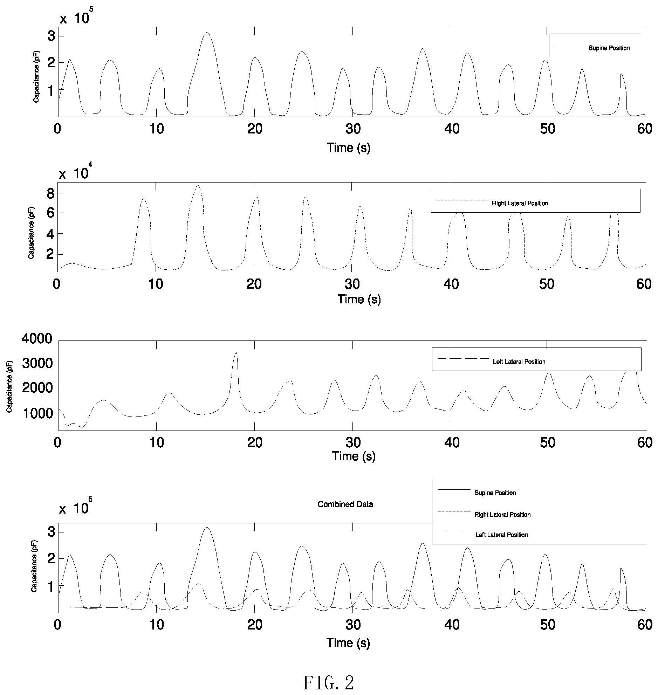

As shown in FIG. 2, abdominal respiratory signals are displayed for a supine posture, a right-side-lying posture, and a left-side-lying posture. The supine signal is largest, followed by the right-side-lying signal and then the left-side-lying signal. A combined image of the three signals clearly shows that the left-side-lying signal is much smaller. These results show that respiratory information can still be obtained under different sleeping conditions. A baseline of abdominal capacitive sensing can also distinguish standing from sitting, because the abdomen is smaller when standing and larger when sitting. When a shirt or work garment is worn, the data may be unstable if the garment is not tightly fitted to the skin. Whether an undershirt is worn may also affect the data; however, when there is no movement, the respiratory signal remains clear.

FIG. 2 may also be used to detect respiratory pause timing and frequency. During a respiratory pause, the capacitance value may be lowest and closest to 0 pF, and the waveform may be substantially flat.

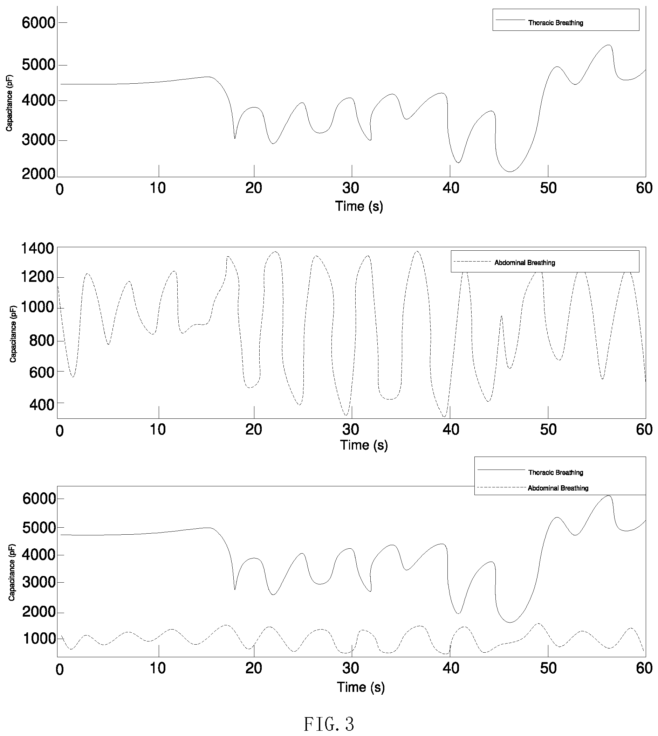

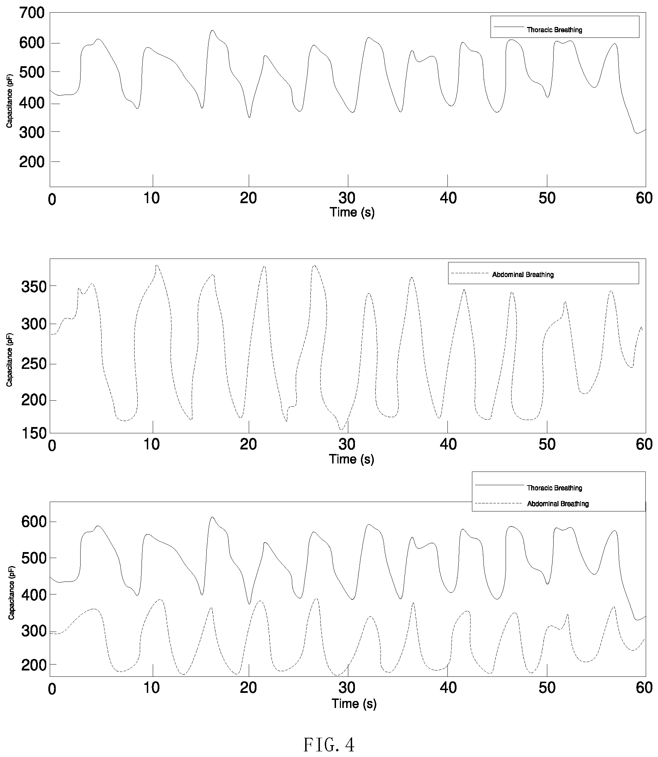

As shown in FIG. 3, chest respiration may be less apparent than abdominal respiration. Respiratory signals during speech differ from respiratory signals during non-speech, but speech normally involves breathing. It is therefore feasible to measure respiratory frequency according to an inspiratory curve. A person who has received breathing training may exhibit a clear respiratory signal while walking because breathing is maintained in a stable manner, whereas many users exhibit irregular and shallow breathing while walking. When sportswear is worn and closely fits the body, a larger capacitance value is generated, as shown in FIG. 4.

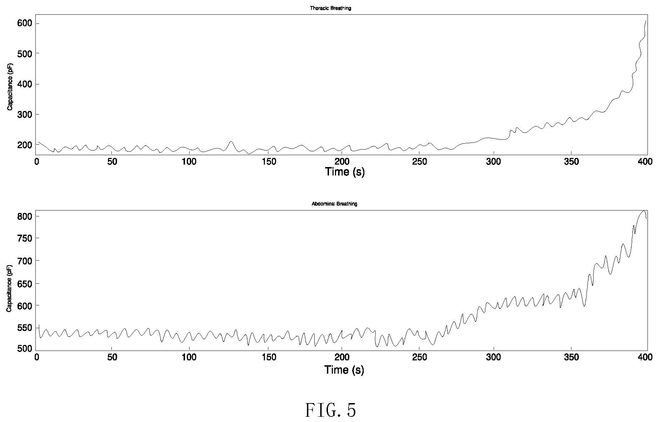

During physical activity, the system may continuously measure respiratory signals. When measured data shows a baseline rise or an increase in frequency, the system may assist in analyzing changes in respiratory pattern, including a capacitance baseline increase caused by perspiration and an increased respiratory frequency after exercise. Under different exercise intensities, amplitude, rhythm, and baseline offset of respiratory waveforms may be used as auxiliary bases for determining a physical state of an entity. As shown in FIG. 5, trained athletes and ordinary users have distinguishable respiratory waveform features.

In one embodiment, a plurality of capacitive sensing structures are disposed at different garment locations to measure capacitance variations between the garment and the wearer, thereby monitoring posture states in real time, including standing, walking, running, sitting, and lying postures. The embodiment verifies the feasibility of multi-point capacitive sensing for posture analysis and may simultaneously measure respiratory signals.

Table 1 shows a database of capacitance sensing values corresponding to different body postures of one subject. The database also includes a back electrode value of 39 pF in an upright posture, 98 pF at a 15-degree forward bend, 110 pF at a 30-degree forward bend, 124 pF at a 45-degree forward bend, 130 pF at a 60-degree forward bend, and 135 pF at a 90-degree forward bend. Each person may have different measured capacitance values because of body differences, skin dryness or humidity, garment structure, and use condition. Nevertheless, regularity still exists, and each individual article may be calibrated for each person. Such information may also function as a personal signature because the articles worn by the person may be different every day.

**Table 1: Capacitance sensing-value database for different regions (posture detection)**

| **Arm, forward/back swing (pF)** | | **Arm, lateral swing (pF)** | |
|---|---|---|---|
| **Position** | **Value** | **Position** | **Value** |
| Arm close to body | 470 | Hand down and close to body | 476 |
| Arm straight | 210 | Arm raised 45 degrees | 354 |
| Arm forward 45 degrees | 256 | Arm parallel to ground | 110 |
| Arm backward 30 degrees | 739 | Arm fully raised | 234 |
| Hip movement (pF) | | Knee movement (pF) | |

| **Position** | **Value** | **Position** | **Value** |
|---|---|---|---|
| Standing upright | 123 | Standing upright | 478 |
| Body bent 30 degrees | 159 | Knee bent 50 degrees | 678 |
| Body bent 75 degrees | 171 | Knee bent 60 degrees | 686 |
| Body bent 90 degrees | 239 | Knee bent 90 degrees | 770 |
| Body bent 120 degrees | 276 | Knee bent 120 degrees | 830 |
| Elbow (pF) | | Head (pF) | |

| **Position** | **Value** | **Position** | **Value** |
|---|---|---|---|
| Flat | 300 | Not moving | 27 |
| Bent 45 degrees | 370 | Forward 30 degrees | 23 |
| Elbow straight | 400 | Forward 45 degrees | 21 |
| -- | -- | Backward 30 degrees | 28 |

### Arm, Knee, Hip, Foot, Sock, and Insole Examples

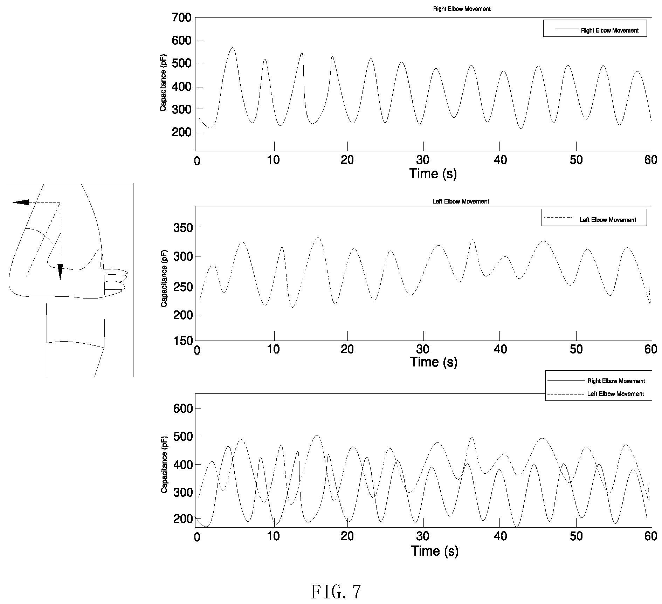

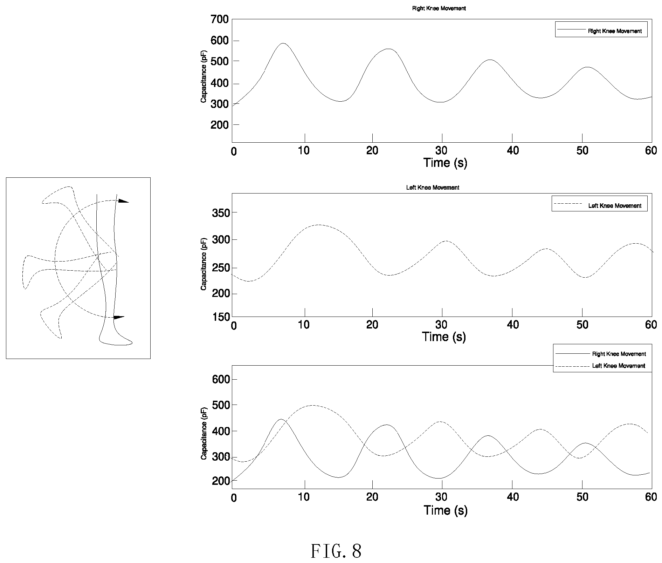

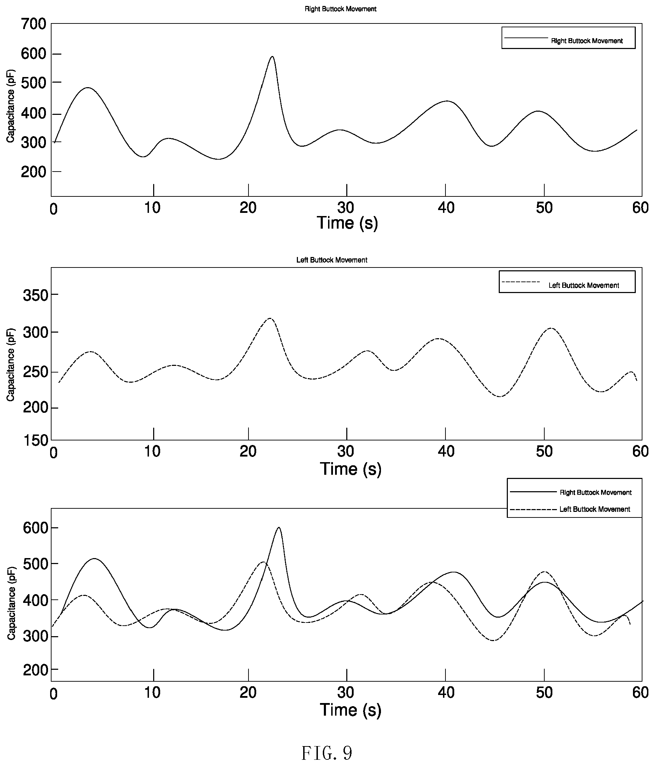

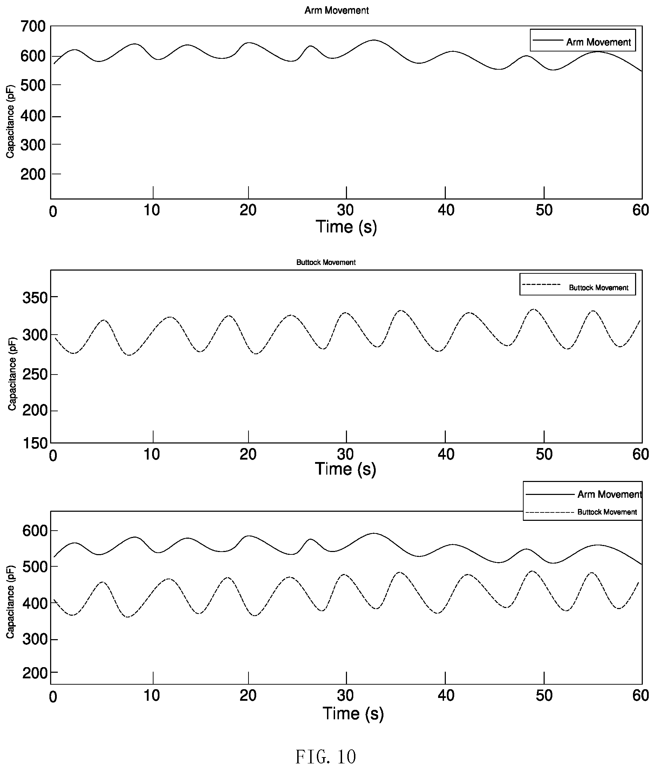

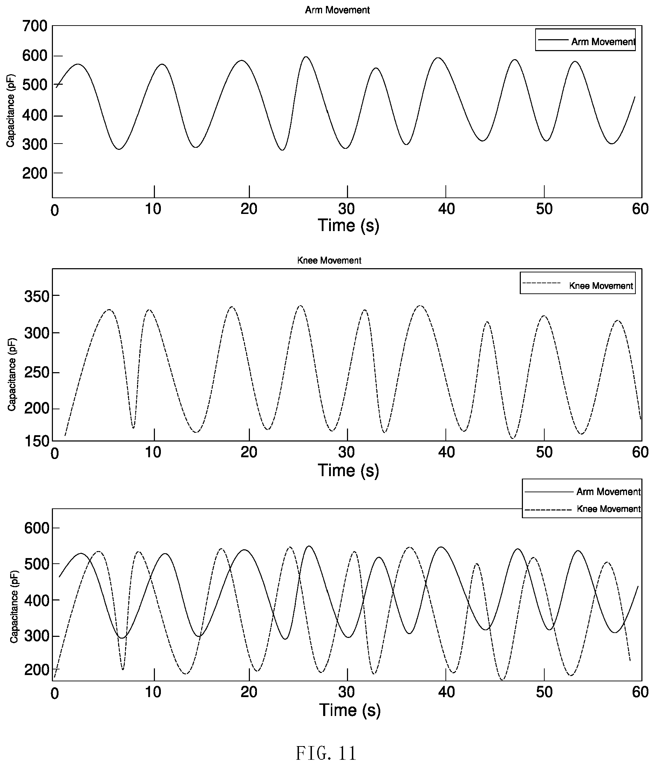

As shown in FIG. 7, a waveform diagram of bilateral elbow movement shows that the left and right elbows may have the same waveform shape but different values. This indicates that the exertion levels of the left and right arms differ or that the arms have different sizes. As shown in FIG. 8, a waveform diagram of bilateral knee movement shows that, in addition to different exertion levels, exertion times may also differ; one waveform may be wider, indicating a longer time of bending force. FIG. 9 shows a waveform diagram of bilateral hip movement. The baseline capacitance values of the left and right hips may be the same, indicating that the pants on the left and right hips have the same body interaction. FIG. 10 shows arm and hip movement, and FIG. 11 shows arm and knee movement. FIGS. 10 and 11 show regular interaction between the hand and the hip or knee, thereby enabling whole-body posture analysis in real time throughout the day.

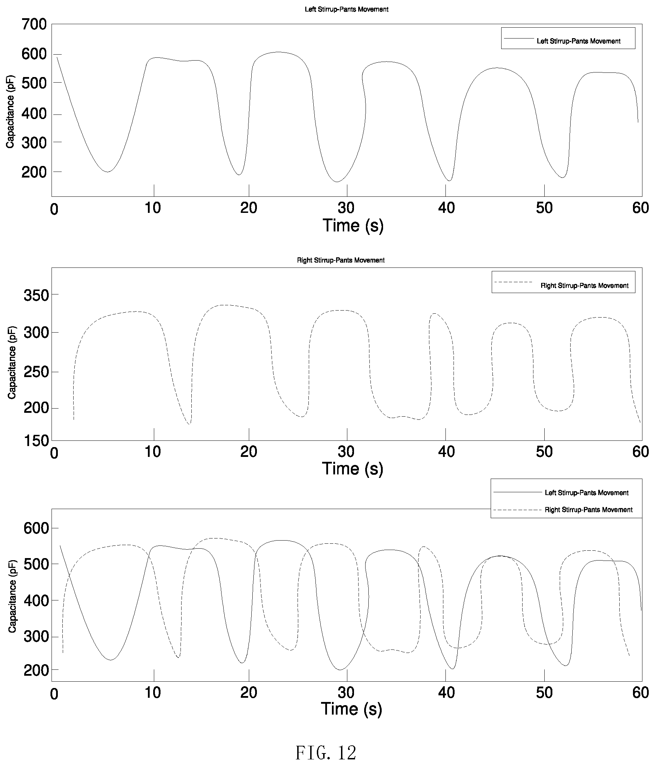

As shown in FIG. 12, a waveform diagram of foot-stepping movement in pants shows that the left and right foot-stepping times differ because the times at which the waveforms reach maximum values differ. When a foot is in the air and stationary, the capacitance value may be lowest, and the lowest times of the left and right feet in the air may differ, reflecting different postures of the left and right feet in the air.

For gait analysis, socks and insoles may be used as shown in Table 2. The sock and the insole may each include a conductive material piece, such as silver fabric, located beneath the front toe area and the heel area and not directly contacting the skin. If an insole is used, a full conductive material layer may be disposed in or below the insole as a reference electrode.

Capacitance measurements from different subjects at the same position may be very close, indicating that multi-point sensing garments can quantify different postures. In consecutive cycles of the same movement, all signals may remain substantially consistent, indicating that a multi-electrode garment provides reliable and quantifiable capacitive sensing for various body positions and movements. These preliminary results emphasize the effectiveness of multi-point capacitive sensing smart garments for quantifying capacitance changes associated with different body postures and movements, and support applications in healthcare and fitness monitoring.

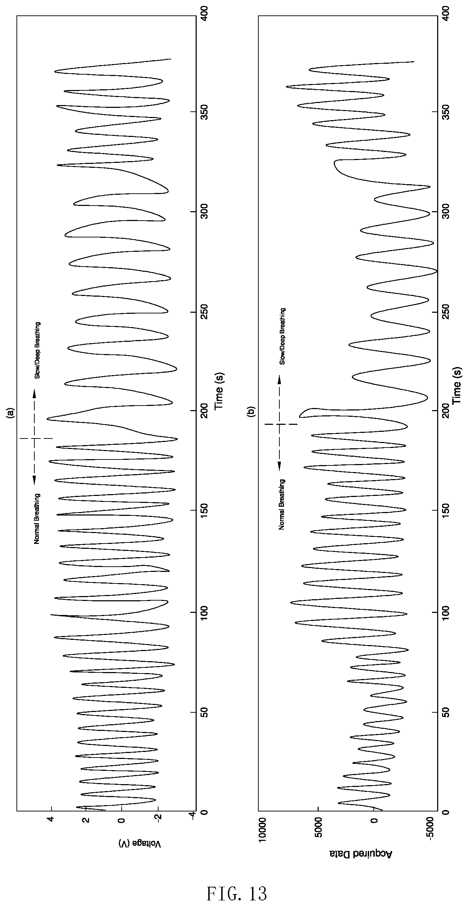

In one embodiment, textile capacitive sensing structures disposed at a plurality of positions simultaneously measure respiratory and walking waveform signals of a wearer. As shown in FIG. 13, synchronous chest and abdominal capacitance variation waveforms can be obtained at different walking speeds. The waveform data may be used for subsequent signal analysis, processing, and determination of a physical interaction state.

Two parallel conductive-line segments may be divided on one side, and the other side may be shared. The insole may also use a front/rear segmented design to replace a left/right design for gait measurement. A full conductive material layer may be provided in or on another side of the insole as a reference electrode, so that multiple front/rear conductive material sections can be formed on the insole for more accurate gait analysis.

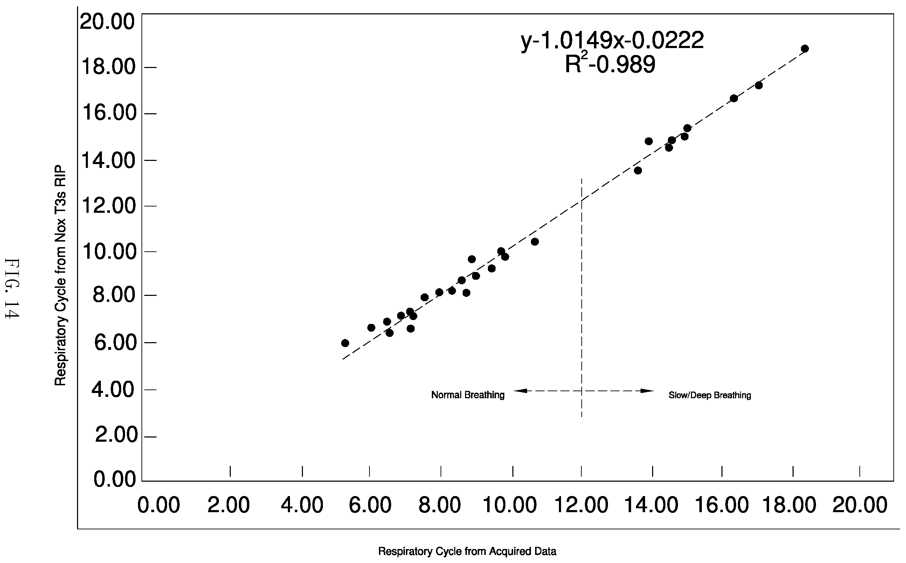

As shown in FIG. 14, a measured correlation coefficient between chest and abdominal capacitance waveforms is about 0.989, showing high consistency. In this embodiment, the human body acts as a conductor plate, air, insole, or garment functions as a medium, and capacitance variation is measured to obtain data related to individual movement. The sensing circuit converts capacitance variation into a voltage or frequency signal, which is acquired and analyzed by the processing module. A reference electrode may be disposed on the top of the insole and multiple sensing electrodes may be disposed on the bottom, thereby synchronously obtaining left/right gait waveforms and chest/abdominal respiratory waveforms. In some embodiments, a contact and separation distance and timing relationship between a foot and an insole may also be analyzed.

In some embodiments, a common change may specifically include synchronous changes, near-synchronous changes, or other changes having time-correspondence features in capacitance data from multiple sensing regions. As shown in FIGS. 13 and 14, chest and abdominal sensing-region waveforms show synchronous changes, and the correlation coefficient reaches about 0.989. This shows that the two sensing regions have a high time-correspondence relationship under respiratory movement and can serve as example data of a common respiratory change. The processing module may correct, compare, or analyze capacitance data from multiple sensing regions according to such synchrony, time sequence, or change trend.

**Table 2: Posture detection database for soccer socks and soccer insoles**

| **Soccer sock front pad (pF)** | | **Soccer sock rear pad (pF)** | |
|---|---|---|---|
| **Position** | **Value** | **Position** | **Value** |
| Foot in air | 325 | Foot in air | 308 |
| Toe up 20 degrees | 358 | Toe up 20 degrees | 372 |
| Toe down 40 degrees | 277 | Toe down 40 degrees | 293 |
| Foot on ground | 460 | Foot on ground | 473 |
| Toe up 20 degrees | 498 | Toe up 20 degrees | 524 |
| Heel up 40 degrees | 410 | Heel up 40 degrees | 436 |
| Soccer insole front pad (pF) | | Soccer insole rear pad (pF) | |

| **Position** | **Value** | **Position** | **Value** |
|---|---|---|---|
| Suspended in air | 176 | Suspended in air | 189 |
| Stepping on ground | 300 | Stepping on ground | 258 |
| Stepping on ball, 10 kgf | 217 | Stepping on ball, 10 kgf | 222 |
| Stepping on ball, 20 kgf | 237 | Stepping on ball, 20 kgf | 239 |
| Stepping on ball, 30 kgf | 254 | Stepping on ball, 30 kgf | 259 |
| Stepping on ball, 40 kgf | 273 | Stepping on ball, 40 kgf | 275 |

### Hand-Fabric, Distance, Force, Ball, Shoe-Sole, and Ground Examples

In one embodiment, a textile capacitive sensing structure is used to measure synchronized movement of both hands. The sensing structure is formed by an ordinary textile material covered with conductive silver fabric. When both hands approach and contact the sensing-structure surface, a corresponding capacitive sensing signal is output, so that a distance of approach, contact state, and magnitude of applied force of both hands can be quantified.

In one embodiment, as both hands gradually approach the capacitive sensing structure, a non-contact capacitive sensing value increases as distance decreases. When the hands first contact the capacitive textile, the capacitance value is about 40 pF. As pressure is gradually applied, the capacitance value continues to increase. When the hands gradually move away, the sensed capacitance value correspondingly decreases. This embodiment may be used for hand stability training and contact-state determination.

Table 3 shows different sensed capacitance values for different distances between a hand and a textile, from non-contact distances to different force levels after contact. The capacitive structure generates corresponding capacitance values according to different distances and forces, and a positive correlation exists. The data demonstrate that, when the distance between a conductive region and a reference electrode decreases from 7 cm to 0 cm, the capacitance value rises from 12 pF to 41 pF, showing a nonlinear increasing characteristic. When applied force increases from 0 kg to 20 kg, capacitance rises from 42 pF to 413 pF, showing a substantially positive correlation. These characteristics support sensing by force state and distance change, including pressure, pulling force, torsional force, or tension changes, and non-contact proximity detection.

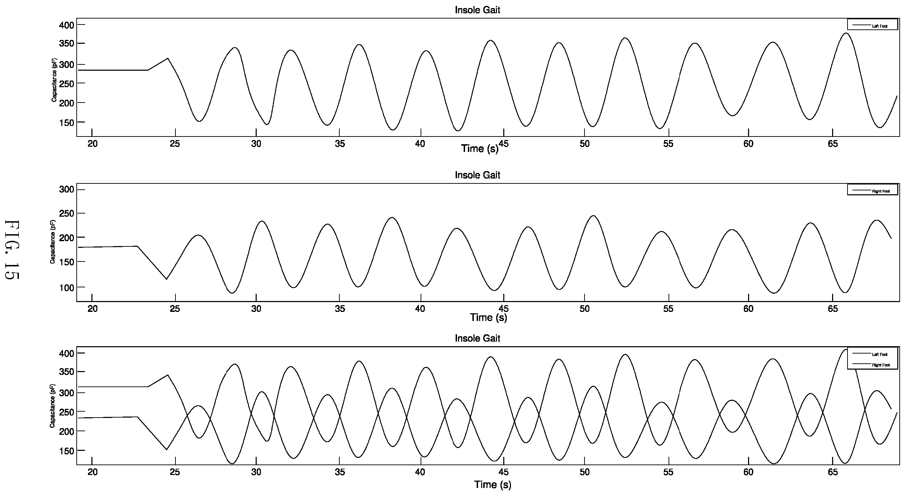

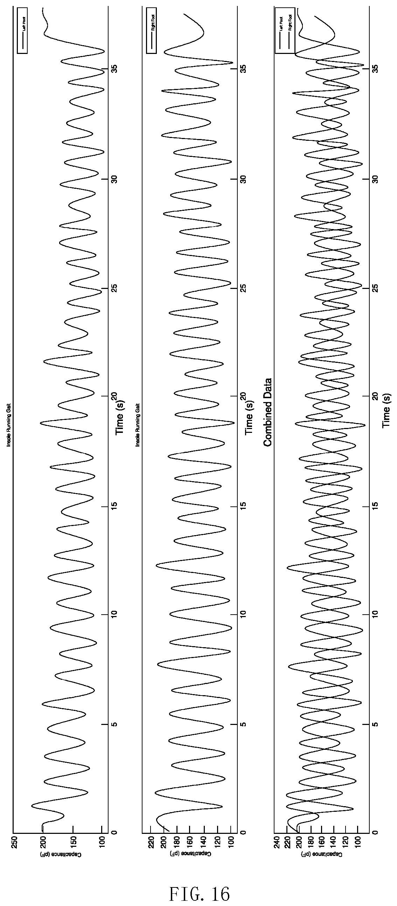

In another embodiment, multiple conductive regions are disposed in an insole and the sensing electrodes do not directly contact the foot. Each insole includes conductive electrode sheets arranged in parallel. Gait analysis can be performed by measuring capacitance variations between the foot and the conductive regions of the insole. FIG. 15 shows a capacitance waveform diagram in a walking state, and FIG. 16 shows a capacitance waveform diagram in a running state. A comparison between the two figures shows that force differences between the left and right feet during landing in walking can be observed, whereas the waveforms and values of both feet during running are more symmetrical. This can assist in analyzing gait balance and shoe-sole wear condition of the wearer.

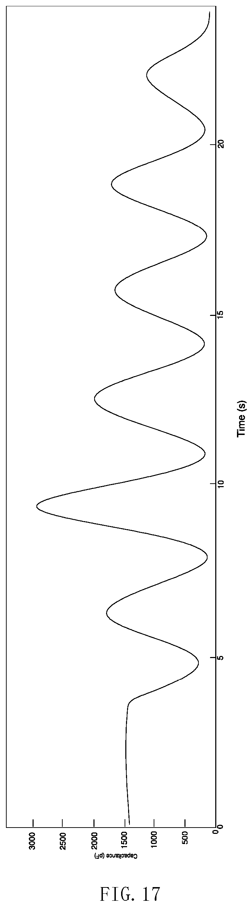

When a basketball or another ball body is provided with multiple conductive regions, the positions and force levels of both hands holding the ball can be measured. In some embodiments, the ball may further be combined with a positioning device to assist in analyzing ball travel distance or movement trajectory. Because socks fit the foot more closely, conductive regions of the socks, even if not directly contacting the skin, can still measure gait analysis data, as shown in FIG. 17. When conductive electrodes are disposed in an insole, incomplete contact between the foot and the insole may occur and cause a time difference in sensed capacitance. Parallel conductive strips disposed left and right on the insole can be used to analyze timing relationships of heel or toe proximity, contact, or separation from the insole, thereby improving clarity of gait determination.

The first to fourth embodiments relate to capacitive sensing between an article and a person. Many wearable or related articles also have capacitive sensing relationships that are not directly between the article and the person. A common example is a shoe sole and the capacitance variation between the shoe sole and the ground, as illustrated in a fifth embodiment and Table 4.

Table 4 was obtained using a 60-kg person wearing shoes. The shoe sole included two conductive rubber strips on the left and right sides of the sole, each having a width of 1.5 cm, with a distance of 2 cm between the two strips. Measurements were taken on different ground materials under the following conditions: foot in air, foot just contacting the ground without force, only the rear heel contacting the ground, half of the sole contacting the ground, both feet flat on the ground, the conductive shoe sole bearing full weight on the ground, and the rear heel lifted. The unit of each value is pF.

Accordingly, two parallel conductive materials such as silver fabric may be disposed on a shoe sole so that walking produces different capacitance changes due to the relationship with the ground.

Table 4 shows capacitance responses of the shoe sole on different materials. The data show that the sensing system can identify environmental structure, such as ground-surface material, through dielectric constant differences. Under full body weight, grass produces a capacitance value of about 7700 pF, whereas a PU running track produces about 39 pF, a difference of about 200 times. Granite at about 280 pF also differs from grass by about 27 times. This characteristic may be used for walking-environment detection, gait-analysis calibration, vehicle tire road-surface detection, and sports-field material identification. Because different ground materials have different dielectric constants, the sensing system can obtain gait data and ground-environment information without an additional sensor.

The same principle permits gait analysis while also identifying different materials such as asphalt, grass, ceramic tile, and carpet, because different dielectric constants produce different capacitance values. The shoe sole still has a capacitive sensing effect even when it has not contacted the ground: as the shoe sole becomes closer to the ground, the measured capacitance value increases. Thus, distance and distance variation between the shoe sole and the ground can be determined, instead of only detecting pressure variation when the foot steps on the ground. If more conductive regions are provided on the sole, more detailed information may be obtained. For example, water on the ground, uneven ground height, or seasonal temperature and humidity changes of the ground may produce different capacitance variations.

Using the same principle, a ball may include two parallel conductive materials having an area of 3 cm by 15 cm. As shown in Table 5, when the ball is placed on a scale and grasped by one hand while being pressed toward the scale, the force of grasping and the capacitance value inside the ball increase together.

In another example, a shoe sole has parallel conductive silver fabrics having an area of 2 cm by 27 cm, and a ball similarly has a conductive material having an area of 3 cm by 15 cm. When one shoe presses the ball surface and the ball is placed on a scale, values shown in Table 6 are obtained. Table 6 shows that the capacitance of the shoe sole and the capacitance value inside the ball increase as force increases.

The data of Tables 5 and 6 show that the capacitive sensing structure can quantify an interactive force between an article, such as a ball, and an entity, such as a human hand or a foot sole. Hand grasping of the ball shows a positive relationship with capacitance, from 55 pF at 0 kg to 124.8 pF at 20 kg. Shoe stepping on the ball also shows a positive relationship with capacitance, from 20 pF at 0 kg to 67 pF at 20 kg. The data support applications in sports training, such as determining ball-striking force or ball-holding posture, and in health management, such as determining foot force balance. Reference sign DD in FIG. 1 corresponds to the ball interaction sensing entity type.

**Table 3: Non-contact distance and contact-force capacitance examples**

| **Non-contact** | | | | | | |
|---|---|---|---|---|---|---|
| **Distance (cm)** | **7** | **5** | **2** | **1** | **0.5** | **0** |
| Capacitance (pF) | 12 | 15 | 18 | 25 | 30 | 41 |

| **Contact** | | | | | | |
|---|---|---|---|---|---|---|
| **Force (kgf)** | **20** | **19** | **18** | **17** | **16** | |
| Capacitance (pF) | 413 | 388 | 362 | 350 | 341 | |

| **Force (kgf)** | **15** | **14** | **13** | **12** | **11** | |
|---|---|---|---|---|---|---|
| Capacitance (pF) | 333 | 307 | 296 | 286 | 274 | |

| **Force (kgf)** | **10** | **9** | **8** | **7** | **6** | |
|---|---|---|---|---|---|---|
| Capacitance (pF) | 253 | 249 | 243 | 238 | 233 | |

| **Force (kgf)** | **5** | **4** | **3** | **2** | **1** | **0** |
|---|---|---|---|---|---|---|
| Capacitance (pF) | 222 | 201 | 181 | 155 | 112 | 42 |

**Table 4: Shoe-sole capacitive sensing variation (unit: pF)**

| **Material / loading point** | **Suspended** | **Contact without force** | **Heel on ground** | **Half sole on ground** | **Flat on ground** | **Full body weight** | **Heel lifted** |
|---|---|---|---|---|---|---|---|
| Ceramic tile | 19 | 108 | 200 | 250 | 430 | 480 | 290 |
| On plastic bag | 19 | 65 | 74 | 104 | 200 | 240 | 140 |
| Fabric (polyester fiber) | 19 | 27 | 30 | 35 | 37 | 42 | 35 |
| Synthetic rubber | 19 | 24 | 37 | 41 | 49 | 60 | 45 |
| Fabric (pure cotton) | 19 | 42 | 50 | 58 | 80 | 87 | 60 |
| Glass | 19 | 24 | 22 | 25 | 32 | 35 | 30 |
| Paper | 19 | 44 | 120 | 160 | 240 | 260 | 140 |
| Synthetic leather bag | 19 | 25 | 30 | 32 | 37 | 42 | 35 |
| Granite | 19 | 119 | 330 | 380 | 550 | 640 | 280 |
| Asphalt | 19 | 19 | 20 | 24 | 30 | 34 | 27 |
| Concrete ground | 19 | 49 | 100 | 125 | 240 | 500 | 360 |
| Grass | 19 | 154 | 4000 | 4700 | 6700 | 7700 | 4300 |
| Iron | 19 | 200 | 1200 | 1500 | 1700 | 19 | 1200 |
| PU running track | 19 | 27 | 29 | 31 | 37 | 39 | 32 |

**Table 5: Ball grasping force versus capacitance value**

| **Force (kg)** | **Capacitance (pF)** |
|---|---|
| 0 | 55 |
| 1 | 89 |
| 2 | 91 |
| 3 | 93.8 |
| 4 | 95.7 |
| 5 | 97.2 |
| 6 | 98.2 |
| 7 | 100.5 |
| 8 | 102.5 |
| 9 | 104.4 |
| 10 | 105.1 |
| 11 | 106 |
| 12 | 106.2 |
| 13 | 106.6 |
| 20 | 124.8 |

**Table 6: Shoe pressing ball force versus capacitance value**

| **Force (kg)** | **Capacitance (pF)** |
|---|---|
| 0 | 20 |
| 2.5 | 40.5 |
| 5 | 46.7 |
| 7.5 | 51.1 |
| 10 | 56.3 |
| 12.5 | 61.8 |
| 15 | 64 |
| 20 | 67 |

### Footwear, Tires, Sports Equipment, and Object-Object Interaction Examples

In one embodiment, the entity includes footwear, including at least one of a shoe sole, insole, or upper, and at least one conductive region is disposed thereon to detect contact pressure distribution, gait features, or wearing condition between a human foot and the footwear. In another embodiment, the entity includes a tire provided with at least one conductive region to detect changes in contact area between the tire and the ground, ground-material characteristics, or a tire force state. A road condition can be estimated through a capacitance change corresponding to tire ground-contact area, without adding an independent force sensor.

In another embodiment, conductive materials are provided on both the shoe sole and the shoe upper to sense the position and magnitude of external force applied to the shoe body, making the structure suitable for gait and force analysis of sports shoes. Balls such as soccer balls and basketballs may also be provided with conductive regions to measure force-receiving position, force magnitude, and force direction of the ball. If combined with conductive structures on a net or a rim, contact events such as the ball entering the net or hitting the rim can be further determined, thereby achieving complete interaction-state detection of sports articles.

Based on changes in capacitive sensing data, the activity state of an individual and a related interacting article may be measured. Taking gait analysis as an example, conductive regions on socks, shoes, or insoles can detect action and reaction forces between both feet and the ground. When combined with sensing data from other body parts such as the chest and abdomen, the force states of joints and gait features can be comprehensively analyzed, thereby determining the movement mode and physical interaction state of the wearer.

In skiing or skating embodiments, conductive regions on boots or skis/skates may detect changes in foot force and contact states with the ground, including snow or ice. When combined with capacitive sensing data from other body parts, the system may assist in analyzing behavior features and gait patterns of skiing or skating.

In another embodiment, when a user holds and supports an article having a conductive region with both hands, a capacitive sensing structure is formed between the hands and the conductive region. As the article weight, contact area, or relative position changes, the capacitance value also changes correspondingly, enabling detection of the holding state and relative force change of the article.

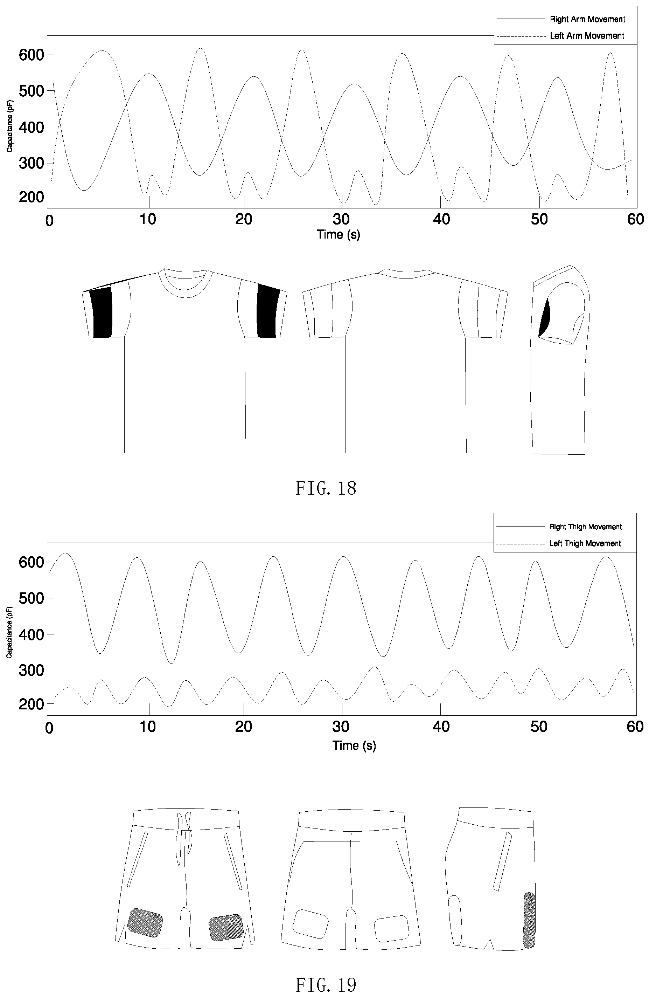

In an eighth embodiment, when a user wears loose short-sleeved clothing, two conductive materials may be provided at the front and back of a sleeve, each having an area of about 10 cm by 10 cm. When the arm moves forward, the contact area with the front conductive fabric increases and the contact area with the rear conductive fabric decreases, so forward or rearward arm movement can be measured. FIG. 18 shows waveforms of forward and backward arm swing. For example, when the arm is lowered and stationary, the front piece measures about 44 pF; when the arm is raised 30 degrees, 66 pF; at 60 degrees, 88 pF; and at 90 degrees, 122 pF. The rear piece may correspondingly measure about 57 pF, 54 pF, 49 pF, and 43 pF. If the arm moves outward, the contact areas of both conductive materials may increase, but the increase may not be large because the contact area between the arm and the two pieces is reduced. If the clothing is not uniform, the capacitance of the rear piece may increase to about 90 pF when the arm is raised 90 degrees because of movement of the clothing itself; this can reveal a relationship between the clothing and the person.

When loose pants are worn, a front piece may have a similar effect. In one example, the front piece measures about 30 pF at 0 degrees, 60 pF at 30 degrees, 100 pF at 60 degrees, and 115 pF at 90 degrees. When the leg moves forward, the value increases clearly. When the leg moves backward, the value may decrease to 27 pF or may not significantly change because the front piece does not have contact variation with the leg. A rear piece located near the buttock may also increase during forward movement because of buttock contact, similar to close-fitting pants. In one example, the rear piece measures 80 pF when standing, 120 pF at 30 degrees, 230 pF at 60 degrees, 300 pF at 90 degrees, and 700 pF when sitting on a chair. When the leg is lifted backward, the value may also increase because the contact area increases, such as 80 pF when standing, 140 pF at 30 degrees backward, 166 pF at 60 degrees backward, and 200 pF at 90 degrees backward. When the body tilts outward so that the thigh moves horizontally, both the front and rear pieces may increase, for example 130 pF at 15 degrees outward and 200 pF at 30 degrees outward for the rear piece. When tilting in the opposite direction, there may be little change because neither of the opposing areas contacts the skin. FIG. 19 shows a waveform generated by thigh contact with conductive materials when a user wearing shorts walks.

### Elbow Electrode, Skin Electrode, Two-Person Interaction, Swimming, and Vehicle Examples

In a ninth embodiment using the elbow as an example, when a capacitive sensing garment is worn and cloth at the neck in close contact with the body is used as a reference electrode, the elbow measures about 100 pF when straight and 245 pF when fully bent. When a skin patch electrode is used as the reference electrode, the elbow measures about 104 pF when straight and 248 pF when fully bent. The two results are substantially similar, indicating that conductive cloth or metal material can replace a patch electrode. In addition, when an elbow electrode has an area of 10 cm by 10 cm and a skin electrode of the same area is placed at the same location, the capacitance value is 1500 pF when the elbow is straight and 90 nF when fully bent. If the elbow electrode sheet is shifted by half of its area, the measured value is 600 pF when the elbow is straight and 45 nF when fully bent. Table 7 shows capacitance changes under external force for a fabric electrode, patch electrode, and skin electrode at the elbow.

As shown in Table 7, measurement values of a skin electrode and a fabric electrode differ and can be used as an example for comparing different electrode configurations. The data indicate that a skin electrode can serve as a form of reference electrode and can assist in determining measurement differences caused by displacement or looseness of a fabric electrode. In some embodiments, the system may adjust a measurement reference among preset reference positions to improve measurement stability.

In some embodiments, a capacitive coupling relationship between a skin electrode and a fabric electrode may be used to compare sensing reference values at the same body position or adjacent body positions, thereby assisting in determining wearing state, posture, force, or respiratory changes. The capacitance value of the skin electrode itself may also change with body bending, respiration, external pressure or tension, and environmental temperature or humidity changes.

In a tenth embodiment, two persons each wear capacitive posture garments. In addition to reading their own data, when the two persons hug each other or put an arm around the other person, the garments of the two persons may mutually affect the measured data. For example, when a male on the left and a female on the right hold hands while walking, and the male puts an arm around the female, the armpit data of the male with his arm opened may change from 180 pF to 114 pF. The female being held may have the capacitance value under the left arm change from 225 pF to 288 pF because the arm is closer to the male. Therefore, when two persons hug, the interaction responses of both persons may have corresponding capacitance changes, and the posture garments can read an interaction mode between two persons.

In an eleventh embodiment, during swimming, the whole body or half of the body may be located in water. A swimsuit, swimming trunks, or swimming cap may include conductive electrodes. Through capacitance changes caused by different dielectric conditions in water and air, movements of the swimmer and position changes of related wearable articles can be measured. In some embodiments, a waterproof skin electrode may also cooperate with the wearable article to assist in determining posture or movement changes during swimming.

In vehicle embodiments, determination of a physical interaction state of a driver is important. Conductive electrodes may be provided at locations such as a steering wheel, seat, seatback, headrest, brake pedal, accelerator pedal, and vehicle door to measure contact states and force changes between the driver and vehicle components. For example, left and right electrodes on the steering wheel may each measure about 78 pF when not held, about 6.2 nF when touched by one hand, about 6.4 nF when grasped, and about 6.6 nF when firmly grasped. The system may determine whether the driver holds the steering wheel with one or two hands, holding time, holding force, and steering behavior. Because the seat has stable contact with body weight, a seat electrode may be used as a stable reference basis.

In one embodiment, the second entity is a vehicle including multiple vehicle components such as a seat, steering wheel, armrest, accelerator pedal, brake pedal, door, headrest, and center console component. At least one conductive region is disposed on each vehicle component and may form a capacitive sensing structure with a conductive region on the driver or a conductive region of a wearable article to determine a contact state, force application state, or relative positional relationship between the driver and each vehicle component. The determination result may be used for driver physical-interaction-state determination, fatigue warning, or driver-state management.

In some embodiments, a conductive fabric electrode is disposed on the seatback. When the body is not in contact, the value is about 200 pF; at 30% contact, about 840 pF; at 50% contact, about 1400 pF; at 70% contact, about 2 nF; and at full contact, about 2.4 nF. The system may thereby determine the driver sitting posture and back-contact state. A headrest electrode may measure about 50 pF without contact, about 90 pF with slight contact, and about 110 pF with complete contact. The data support determination of a driving posture state. Use of conductive electrodes for ECG, EMG, TENS, AED, or other physiological or medical purposes is an optional advanced embodiment and is not the core claim scope of the invention.

When a seat belt is fastened across the chest, respiratory variation may be 135-200 pF. When the body leans forward 30 degrees, the value may be 280-380 pF; when the body leans forward 60%, 600-700 pF; and when the body is fully leaned forward, 1300-1600 pF. Therefore, interaction between the chest seat belt and the body can be known and a respiratory signal can be measured.

For an abdominal seat belt, a normal respiratory value may be 150-170 pF; when the body leans forward, 190-210 pF; and when fully leaning, 220-240 pF. A brake pedal pad may measure 285 pF without foot contact, 300 pF at initial contact, 304 pF under ordinary braking force, and 308 pF under full braking force. An accelerator pedal pad may measure 50 pF without contact, 65 pF when the foot is just placed thereon, 70 pF during ordinary acceleration, and 74 pF under full accelerator force. A vehicle door may measure 50 pF without contact, 5.8 nF when closed, and 3 nF when opened by hand. These data may assist in determining driver behavior state and may be combined with other sensing data for respiratory or motion analysis. In some embodiments, an image capture device may be used as auxiliary information for synchronous calibration.

If the driver also wears capacitive sensing clothing or pants, the vehicle data and wearable data can mutually calibrate each other. If the buttocks are not properly seated but are moving, for example when only half of the buttocks press the seat, the capacitance value when one hand first touches the steering wheel may become 4.8 nF and the value when fully grasped may become 5.1 nF. These data differ from data obtained when the person is fully seated on the garment, indicating buttock movement. Capacitance variation between the driver and the seat may also be used to understand the driver mental or emotional state. If the variation frequency is high, it may indicate unstable driving; if there is no variation, it may indicate that the driver is sleepy.

**Table 7: Capacitance variation of conductive silver fabric, patch electrode, and skin electrode at the elbow**

| **Elbow configuration** | **Straight** | **Fully bent** |
|---|---|---|
| Conductive silver fabric | 100 pF | 245 pF |
| Patch electrode | 104 pF | 248 pF |
| Skin electrode at the center of the elbow | 1500 pF | 90 nF |
| Skin electrode shifted by half of the elbow area | 600 pF | 45 nF |

### Vehicle Tires, Roads, Chairs, Beds, Multi-Article Calibration, and Reference Switching

In automobile, bicycle, and motorcycle tire embodiments, drivers have long known that insufficient tire pressure is unsuitable for road use; however, many vehicles still travel with insufficient tire pressure. Timely knowledge of accurate tire pressure may prevent accidents. If a vehicle does not have a tire pressure detection system, the driver must get out and use a tire-pressure gauge to maintain safety. In the present capacitive sensing system, a sensing electrode and a sensing circuit are provided on the tire to detect tire condition and variation, and to determine the condition of the external ground. For example, if one of four automobile tires leaks air, the capacitance value measured by that tire differs greatly from an original value, and the values sensed by the other three tires may also differ. The system can therefore function as a tire-pressure detector and can also determine conditions of the ground surface contacting each tire.

The system may also change a driving condition to ensure driving safety. For example, when a front wheel passes over a pothole, the force experienced by the vehicle may be recorded, and the result when the rear wheel passes over the same pothole may also be recorded. If a similar location is encountered later, the system may determine how to respond. When a tire senses a different ground material, the driving mode may be adjusted. A gravel road, asphalt road, or rainy road may have different friction coefficients, so the driving mode should be adjusted. The physical interaction state between the tires and the driver may also assist in evaluating the driver physical strength and mental state.

Capacitive sensing values of tire pressure may differ on uphill and downhill road sections. At the beginning of an uphill section, the capacitance value of a front wheel may increase first; at the beginning of a downhill section, the capacitance value of a front wheel may decrease first. A double yellow solid line on a road, used to divide a road into two-way lanes and prohibit crossing or U-turns, may have a different dielectric constant or may include conductive material. When a tire contacts the line, the event can be recorded and the driver may be notified. Similarly, a capacitive chair at work or a capacitive bed may measure a human posture and mental state.

Capacitance values measured on clothing or pants and capacitance values measured by a bed or chair having conductive electrodes and sensing circuits can mutually calibrate a database. For example, when a person lies supine on a bed, the back of the garment has a value corresponding to no bending, the legs have values corresponding to knees not bent, and both thighs contact the bed in a straight state. When standing in an elevator, both feet are straight. In a sitting posture, the knees are about 90 degrees. As another capacitive sensing example, sports pants may measure 4 nF at the left buttock when standing, 6.2 nF when sitting on a chair, and 10 nF when the chair has a conductive electrode sheet. Thus, an automobile seat and pants can together measure different effects for the user, and the values from the pants can be analyzed together with chair data with or without electrode sheets.

If an automobile has electrode sheets but an office chair does not, measured values differ. The system may therefore distinguish the composition of an article, whether electrode sheets are present, whether the electrode-sheet material has a different dielectric constant, or whether the article is elastic. A non-elastic chair may produce a larger value because the body directly presses against the chair, while an elastic chair may produce a lower value. Thus, the system may determine whether a chair is elastic, and the capacitance sensing response speed may also differ; a hard, non-elastic chair responds faster. Similarly, a 4-cm-wide conductive region on the back of a garment may be used to measure the bending degree of the human posture. When the seatback has no conductive electrode, the value may be 330 pF; when the seatback has an electrode sheet, the value may be 490 pF.

The same principle as in the pants embodiment applies to a seatback and a garment. The seatback and the garment may form capacitive sensing nodes related to the same first entity. In other words, the garment and the chair may both serve as related articles and may each form a capacitive coupling relationship or capacitive measurement relationship with the same first entity. One related article may have a sensing electrode or controller, and another related article may have or not have a controller and a sensing electrode. Because different related articles have different materials, areas, elasticity, conductive region configurations, distances from the human body, or contact states, the obtained capacitance data may have different variation amplitudes, time-correspondence relationships, or response characteristics.

When a conductive region of about 4 cm in width is disposed on the back of a garment, it may be used to measure a degree of body posture bending. When the seatback has no conductive electrode, about 330 pF may be obtained; when the seatback has an electrode sheet, about 490 pF may be obtained. The processing module may compare, correct, verify, or compensate the capacitance data obtained by the garment and the seatback to analyze a contact state, posture variation, or force state between the same first entity and different related articles.

The same principle may also be applied to an inner garment JJ and an outer garment EE. In some embodiments, both the inner garment and the outer garment may be provided with abdominal respiration sensing electrodes. The electrode area of the inner garment may be smaller, and the electrode area of the outer garment may be larger. When both are worn at the same time, because the inner garment is closer to the human body and the outer garment is located outside, capacitance data obtained by the inner garment and outer garment may have different amplitudes, sensitivities, phases, or common-background changes. In one test, a coat measured respiration-related capacitance variation of about 260-465 pF, and an inner garment measured about 230-614 pF. When the inner and outer garments are not worn simultaneously, they may obtain different ranges of capacitance data. These differences indicate that capacitance data obtained by two different related articles for the same first entity may form mutual sensing, mutual comparison, or mutual calibration relationships.

When the inner garment is closer to the human body, it may more directly reflect respiration, local body deformation, or close-fitting contact state. Because the outer garment is outside the inner garment, its capacitance data may be affected by body movement, relative movement of the inner garment, an air gap between the two garment layers, garment tightness, and external environment. The processing module may compare capacitance data obtained by the inner garment and the outer garment to analyze time correspondence, synchronization, relative delay, regional difference, or common background change, and may use one as a correction, comparison, verification, or compensation reference for the other.

In gait embodiments, the sock AA, insole HH, and shoe sole II may also form comparable capacitance data. Because the sock is worn on the foot and is more closely fitted to the skin, it may more directly reflect foot movement, force, or wearing fit. The insole or shoe sole is typically separated from the foot by a sock, shoe interior space, or shoe material; therefore, capacitance data obtained by the insole or shoe sole may have delay, phase difference, synchronization difference, incomplete contact, or variation-amplitude difference relative to sock data. The processing module may compare capacitance data from the sock, insole, and shoe sole to analyze gait timing relationship, force trend, shoe-sock matching state, or ground-surface related background changes.

When no shoe is worn, gait analysis data may be more direct. Because an insole and a shoe sole do not necessarily completely fit the foot, measurement errors may occur. In some embodiments, gait signals from a conductive region on the insole surface and the foot sole, together with capacitance data corresponding to a non-contact state between the insole or shoe sole and the person, may be used for calibration. In other embodiments, an acceleration sensor, positioning device, or image capture device may be used as auxiliary calibration information. When a force variation of an outer electrode is more significant than that of an inner electrode, measurement results from different conductive layers may assist in determining force magnitude and order. Signal attenuation caused by washing, use, or material aging may be corrected, compared, or analyzed based on existing measurement data to maintain consistency of sensing results.

Similarly, capacitance data obtained between the shoe sole II and the ground, ball DD, or other external environment, as well as interaction data between the ball DD and related articles such as the basketball board LL or soccer goal net MM, may be analyzed together with capacitance data of first-entity wearable articles to distinguish human behavior, article interaction, and external environmental change, and may serve as bases for mutual correction, comparison, or compensation.

When all electrode sheets in the above articles interact with a user or another article, poor contact may sometimes occur between the original reference electrode and the body or another article. In some embodiments, one of other existing conductive regions may be selected as a new measurement reference. The circuit design may be as shown in FIG. 20. When the originally selected reference node affects signal quality because of contact state, positional relationship, external interference, or other measurement-condition changes, the processing module may cooperate with a switching circuit to reselect a more suitable one of multiple existing conductive regions as a reference node, so as to maintain stability, consistency, and comparability of measured data. In a configuration having multiple conductive regions, the reference node may be shared by multiple sensing regions so that different sensing regions perform data acquisition and analysis under the same or similar measurement comparison basis.

In related embodiments of the circuit shown in FIG. 20, the capacitive sensing system may provide multiple reference grounds, reference points, or reference electrodes on a garment, pants, socks, footwear, seat, bed, or different body parts. The reference ground, reference point, or reference electrode may be disposed at a position that more easily makes stable skin contact during use, including the waist, thigh, arm, elbow, back, buttock, neck, shoulder, calf, or foot. When a currently used reference basis does not satisfy a predetermined condition due to contact state, signal quality, or stability, the processing module or sensing circuit may select another candidate reference ground, reference point, or reference electrode as a new measurement basis to maintain measurement stability of capacitance data.

**Database, Calibration, Environmental Change, and Additional Article Examples** In some embodiments, the first entity A and the second entity B may respectively be a human body, a part of a human body, an article, a wearable article, a device, furniture, a vehicle, an environmental object, or a combination thereof. Conductive regions of each entity generate capacitance data through capacitive coupling relationships, and the capacitance data are acquired and analyzed by the sensing circuit and processing module.

The obtained capacitance data may be stored in a database platform and further used to build a personal behavior model, a multi-entity interaction model, an environmental-change model, or a combination thereof, thereby generating one or more prediction models for analyzing behavior state, interaction state, usage pattern, environmental change, or a combination thereof.

In some embodiments, the system may provide multiple reference nodes. The processing module may select one reference node from the multiple reference nodes as a current measurement reference according to contact state, signal quality, or capacitive coupling state of each reference node. When the measurement reference needs adjustment, another reference node may be selected.

The invention relates to a multi-entity interaction sensing system and method. At least one article contacts a user, such as a garment, pants, socks, an insole, a shoe sole, or an article in the user environment, such as a vehicle for driving, a soccer ball or basketball for sports, a chair for sitting, or a bed for lying down. Each article includes at least one conductive region. The conductive region directly or indirectly contacts the human body to form capacitance, or the article itself includes a conductive region that directly or indirectly contacts another article to produce induced capacitance. In another arrangement, an electrode on the user skin senses capacitance variation with the outside. Under a provided signal, pressure, pulling force, or tension between the human body and an article or between articles causes capacitance variation. Temperature or humidity change between the human body and an article or between articles also causes capacitance variation, and the addition of another material between the article and the human body or between articles may also cause capacitance variation. The capacitance variation may be displayed as frequency, voltage, or current, and the variation may be used to establish a data collection database for different positions between the human body and an article or between articles. Features obtained from data at different body positions in different postures may be used to extract a model of behavior of the human body and article and external environmental changes. The extracted features may then be used for motion recognition between a human body and an article or between articles, including beginning to use an article, determining whether capacitance variation between an article and a person or between articles is caused by movement or by external environmental temperature or humidity change, and analyzing capacitance variation caused by external force applied between an article and a person or between articles. When human behavior is measured, respiration, perspiration, pulse, heartbeat, and other signals may also be measured.

In some embodiments, the external environment includes temperature, humidity, ground-surface material, or external-force intervention. In some embodiments, an article and the body, or an article and another article, directly or indirectly contact a conductive region, thereby forming capacitance. In some embodiments, an article contacting the human body may include clothing, shoes and socks, bed sheets, gloves, bracelets, sports equipment, vehicle components, balls, tires, slippers, insoles, and the like, each provided with a conductive region to form a capacitive sensing structure. In some embodiments, the article and body or the article and another article are provided with a circuit that provides a signal to detect capacitance variation.

In some embodiments, a conductive region of the article or body may include a conductive electrode directly on a skin surface, inside and outside the skin, or only inside the skin; an article that directly or indirectly contacts the skin and has a capacitive sensing function with the human body; an article worn on the user but not having a capacitive sensing function with the skin, instead sensing the external environment; an independent article not worn by the person, wherein an electrode of the article forms capacitive sensing with a wearable article or skin of the person; capacitive sensing between two articles not contacting the body and having no interaction with the person; capacitance variation generated by interaction between a person and an entity; or a conductive electrode region disposed on a floor or carpet.

In some embodiments, each person may have wearable articles. Before exercise, warm-up stretching of whole-body muscles by dynamic stretching activates the muscles and may recalibrate standard database data between an original article and the person. The calibrated data may then be used for determining a physical interaction state between the wearable article and the person. The articles may include a garment, pants, socks, and shoes. Before, during, or after use, the system may use capacitance data obtained from a predetermined action or state such as a stationary state, specific posture, stretching action, or dynamic warm-up to correct, compare, or analyze capacitance measurement data or a reference basis, or adjust a reference potential of a reference electrode, thereby maintaining measurement consistency and reliability under different use scenarios.

In some embodiments, sensing data obtained at the same time from different articles may be used to detect and process an interaction mode more completely. For example, a controller in clothing may measure posture variation, and a controller in a chair may also measure body posture, making interaction-mode analysis more accurate and providing more information. Features of capacitance-value variation of different articles at different body positions may be used to extract a model of human-article behavior and external environmental changes, and the extracted feature data may be used to determine movement between the human body and an article or between articles. The system may detect capacitance sensing variations generated between the user and body-worn articles, surrounding articles, or the environment, and may determine physical interaction states of the article, environment, and user.

In some embodiments, the article is a shoe sole. A conductive region of the shoe sole can measure gait analysis and, because different ground materials produce different capacitance variations, can identify the ground material. In a soccer interaction state based on the same principle, the system can detect which portion of the shoe sole or shoe upper contacts the soccer ball and applies force.

Similarly, when a person is in a vehicle, motorcycle, or bicycle, the wheels function analogously to shoes. A wheel replacing the shoe sole can measure wheel movement and ground-surface material changes.

In some embodiments, physiological information or posture detected at the same position can be further confirmed and calibrated using an article on the user body or a peripheral article. For example, an in-vehicle capacitive sensing system may be analyzed together with sensing from body clothing, socks, and shoes to analyze a driving interaction mode. Physiological information or posture detected at the same position may also be confirmed and calibrated using a skin electrode on the user body and a peripheral article. Such data can be used to measure and process interaction-mode analysis, particularly when the electrode is on the skin, thereby calibrating a behavior database between the article and the person. Bed sensing and capacitance sensing of pajamas or pants may correspond to each other and mutually confirm and calibrate the database.

In some embodiments, the article may be a floor, road, grass, or carpet. Under such conditions, changes in temperature, pressure, material, or humidity between the article and a person, between the article and another article, or between articles may produce capacitance changes. Data analysis may be performed during warm-up stretching of the whole body before exercise to recalibrate database data. After exercise, stretching may also recalibrate databases of articles such as clothing, pants, socks, and shoes.

Capacitance values obtained by analyzing gait using an article may reflect change trends in bending angles of the knee joint or hip joint. A sensed capacitance value measured by an article at the knee joint or hip joint may be used to compare or analyze foot posture or state. Thus, articles on the foot, such as socks, insoles, and shoes, may be used to calibrate database data of articles at the knee joint or hip joint, such as clothing, knee pads, or pants. Conversely, capacitance sensing values of articles at the knee joint or hip joint may be used to calibrate database data of socks, insoles, and shoes. Similarly, capacitance values measured by clothing at the elbow or an elbow-pad article may be used to compare, analyze, and calibrate the posture and state of the arm. During walking, running, and climbing stairs, the left and right hands and feet usually move regularly, so capacitance values measured by articles on the left side of the body can be used to compare, analyze, or calibrate database data of articles on the right side, such as clothing, pants, socks, and shoes, and may also be used for other positions. For example, capacitance variation of the left knee may reflect capacitance variation trends of clothing, pants, socks, insoles, and shoes on the same side and on the opposite side, and may be used for database calibration.

In some embodiments, when the sensed capacitance value of an article at one body part changes while other body parts do not show significant changes, the change may serve as an auxiliary basis for determining local temperature, humidity, or force-state changes at that body part. If sensed capacitance values of articles at all body parts change in the same direction, the system may assist in distinguishing systemic environmental factors, such as environmental temperature or humidity changes, from local body-state changes. Further determination may be made in combination with capacitance variation of a reference article that does not contact the human body, such as an outer surface of a shoe sole.

In some embodiments, a reference electrode of the article may be formed by a conductive region contacting the skin, and the obtained capacitive sensing value is one value. When material isolation is present so that the reference electrode does not directly contact the skin, the capacitance sensing variation includes variation generated by the reference electrode, and thus a change in the body portion corresponding to the reference electrode can be known. In one example, a reference electrode of clothing, pants, or socks is a stable body-contact position, such as the back, waist, thigh, calf, foot sole, or neck, where conductive material may be arranged in a ring. Alternatively, multiple points may be provided on the garment or pants as reference electrodes. A reference electrode may also be provided at each sensing point and in contact with the skin; for example, a reference electrode on the elbow may produce a value corresponding to elbow bending.

In some embodiments, a reference electrode of an article may be shared by other sensing regions as a measurement reference. When an obtained capacitive sensing value is clearly unstable, another existing conductive region or existing reference position may be used as the measurement reference to obtain a more stable signal. Capacitive sensing analysis may further be combined with auxiliary sensing data, such as data from an acceleration sensor, inertial sensor, image capture device, or positioning device, to enhance identification of behavior and environmental changes.

In some embodiments, a sensor of the same article may measure different physiological and posture changes of the body. For example, a capacitive sensing structure of pajamas may measure respiration and may also detect prone sleeping, supine sleeping, side sleeping, and whether a blanket is covered, which can be used to evaluate sleep quality. Abdominal-respiration garments and respiration pants may also distinguish standing and sitting. Any respiration garment or pants may measure respiratory information and may also provide information regarding perspiration and respiratory-rate variability (RRV).

In some embodiments, an article such as a sock or insole may use only two parallel electrode sheets that do not contact the skin to measure gait analysis. Because a sock fits the foot, it may measure the most accurate gait data. When the conductive electrodes are in an insole, the foot may not contact the insole, and the sensed capacitance value may be delayed. The system may analyze and process this issue, for example by calculating the time from heel or toe approaching the insole to foot-insole contact, or the time of heel separation from the shoe. By dividing the two parallel lines into multiple segments, each segment forms an independent capacitive sensing relationship with the foot, so the relationship between the user foot and shoe can be known more clearly and gait analysis can be more accurate.

In some embodiments, a shoe sole has two parallel conductive materials such as silver fabric facing the ground. Different capacitance variations are produced during walking because of the relationship with the ground. Gait analysis can be measured, and different materials such as asphalt, grass, ceramic tile, and carpet produce different measured capacitance values because of different dielectric constants. Thus, the system may simultaneously identify the environment. The capacitive sensing effect exists even before the shoe sole touches the ground; as the shoe sole becomes closer to the ground, the measured capacitance value increases. Thus, distance and variation between the shoe sole and the ground can be known, rather than only pressure variation between the shoe sole and the ground when the foot steps on the ground. More conductive regions on the sole provide more detailed information. Changes on the ground, such as water, uneven height, or seasonal ground temperature and humidity, produce different capacitance changes.

In some embodiments, a ball article, such as a soccer ball, has two or more conductive regions. When a shoe steps on the ball, kicks the ball, or a body blocks the ball, the force applied to the ball is proportional to capacitance variation of the conductive regions. Multiple conductive regions can determine force-receiving position, force magnitude, and direction. Conductive structures may also be provided on a ball net or goal frame. Because material hardness is different, capacitance responses generated when a soccer ball enters a net and when it hits a frame are distinguishable, so the contact event type can be determined. A sensing circuit worn by a goalkeeper may also measure capacitance variation generated when the ball contacts the goalkeeper, and comprehensive sensing data from multiple parties can analyze physical interaction states of entities in a sports scene.

In another embodiment, a basketball has two or more conductive regions. When a hand grasps the ball or the ball hits the ground, the capacitance variation of the ball is proportional to force. Multiple conductive regions can determine the force-receiving position and direction of the ball. When the basketball collides with a rim or touches a net, different material elasticity and contact manners produce different capacitance-response features, which can distinguish contact events such as rim contact, entering the net, or edge contact, thereby determining physical interaction states of contact events in basketball.

In some embodiments, conductive regions may be provided on a shoe sole, insole, ball, and bat. The conductive region on the shoe sole may measure gait features and ground-surface material, because different ground surfaces produce different capacitance changes. Special movements during sports, such as sliding, change the contact state between the shoe sole and the ground and can also be detected and analyzed by capacitance variation. Conductive regions on a ball and bat may further record striking force, contact position, and motion trajectory for sports performance analysis.

In some embodiments, the article is a skin electrode. The capacitance value generated between the skin electrode and an electrode at the same location may be used to adjust or calibrate the position and database of a body-worn article, such as clothing, pants, socks, gloves, a hat, mask, ear cover, shoes, skirt, artificial hand, artificial foot, artificial limb, belt, waist belt, backpack, waist bag, eyeglasses, hiking bag, helmet, or metaverse head-mounted device. This provides improved interaction-mode analysis through an interaction effect between an article such as clothing and an electrode on the skin.

In some embodiments, the skin electrode itself may include a sensing circuit for sensing capacitance variation of an outer garment or other article. When the body bends, breathes, receives external pressure or tension, or when environmental temperature or humidity changes, the capacitance value of the skin electrode changes accordingly. The system can detect capacitance changes at different body locations and capacitive relationships among them, such as a left leg crossing over a right leg or a left hand placed in front of the chest, thereby assisting in measuring respiration, posture, force, and other physical interaction states.

In some embodiments, tires of an automobile, bicycle, or motorcycle may be articles having conductive regions, and may be used to measure state changes of the tires themselves and capacitance-data changes corresponding to tire-ground contact. More specifically, differences generated by different tires or different ground conditions may assist in determining tire force, contact state, or ground-material changes. When the capacitance value between a reference electrode being used and the body or another article is unstable, the system may reselect another existing conductive region or preset reference position as the measurement basis.

In some embodiments, wearable articles such as helmets, safety helmets, hats, swim caps, garments, pants, eyeglasses, headscarves, masks, watches, bracelets, gloves, socks, bed sheets, pillows, insoles, earphones, rings, or nail patches may each include conductive regions for measuring capacitance changes. Shoe soles, shoe uppers, backpacks, chairs, beds, or electrodes on human skin may also be corresponding sensing positions. The measurement data may serve as comparison data for force, contact, or posture changes at different body parts.

In some embodiments, a conductive electrode on the skin, whether attached in the form of a totem, painting, tattoo, or patch, may perform capacitive coupling through a wire or conductive region on clothing in a non-direct-contact manner, enabling a fabric sensing circuit to obtain data of human posture, force, respiration, and other physical interaction states without causing discomfort to the wearer. Measurement of ECG, EMG, brain waves, body fat, or other physiological information using the skin electrode is an optional advanced embodiment and is not the core claim scope of the invention.

In some embodiments, the article may include a vehicle body, vehicle interior components contacted by the driver, and articles worn by the driver, such as a steering wheel, seat, seatback, headrest, brake pedal, seat belt, accelerator, and vehicle door, each of which may include conductive electrodes. Under this system, the driver behavior state can be assisted and capacitance changes related to respiration or posture can be measured. If the driver simultaneously wears capacitive sensing clothing and pants, results measured by vehicle articles and wearable articles may be compared or calibrated with each other. In some embodiments, an image capture device may be combined as auxiliary calibration information.

In some embodiments, automobile, bicycle, and motorcycle tires are articles. The tires include sensing electrodes and sensing circuits to detect tire condition and variation, and may function as a tire-pressure detector while also determining external ground conditions. For example, if one of four automobile tires leaks air, the capacitance value measured by that tire differs significantly from an original value, and capacitance values of the other three tires may also differ. If a double yellow solid line on the ground has a different dielectric constant or is made of conductive material, contact by the tire can be recorded and the driver may also be notified.

In some embodiments, two different articles may measure the same event. The capacitance values of the two articles may mutually interact, allowing the system not only to detect information but also to perform calibration. To improve sensing accuracy, in some embodiments the processing module may adjust reference parameters or perform correction, comparison, or analysis according to signal deviations caused by wearing-position shift, environmental change, number of washing cycles, or material aging. In some embodiments, stability-related parameters may be calculated according to fluctuation degree of sensing data to assist adjustment of a measurement reference or interpretation of an abnormal state. When capacitance variation differences between multiple corresponding positions, such as left and right feet or symmetric article positions, continue for a period of time, the differences may serve as reference information for determining a force state, wear condition, or measurement abnormality of the corresponding article, and a reminder signal may be output when needed.

In some embodiments, at least one conductive region of an article may form a capacitive sensing structure with the body, another article, or a skin conductive region, and may obtain a corresponding capacitance value as data for subsequent comparison and determination.

### SUPPLEMENTAL PCT EMBODIMENTS AND TECHNICAL DISCLOSURE

An object of the present invention is, based on the principle of prior U.S. Patent Application US20130066168A1 and by using a capacitive sensing principle, to provide a new method and system for generating physiological signals using a fabric capacitive sensor, so as to detect user behavior and changes in the external environment.

The behavioral informatics (BI) of the present patent is a study of capacitive sensing information with respect to behavior, to obtain behavioral intelligence and behavioral insight. It is also a method combining science and technology by using data of capacitance changes among an article and a person, an article and another article, or an article and the environment. The purposes include analyzing current behavior and inferring possible future behavior, which occurs through pattern recognition. On the basis of behavioral science analysis using the data obtained from capacitance changes, the analysis may include behavior modeling, applied behavior analysis, behavior analysis, behavioral economics, and organizational behavior. In artificial intelligence, behavior modeling uses the capacitance information to perform a behavior selection algorithm or an action selection algorithm, which is an algorithm for selecting appropriate behavior or action for one or more intelligent agents. In game artificial intelligence, the algorithm selects behavior or action for one or more non-player characters. Common behavior selection algorithms include: (1) a finite state machine; (2) a hierarchical finite state machine; (3) a decision tree; (4) a behavior tree; (5) a hierarchical task network; (6) a hierarchical control system; (7) a utility system; and (8) a dialogue tree for selecting what to say.

Applied behavior analysis is dedicated to developing procedures capable of producing observable behavior changes.

The present invention emphasizes that behavior analysis includes antecedents and consequences, and these are performed using information obtained from capacitance changes.

Behavior analysis is a method and system for understanding behavior of humans and other humans or animals. Behavioral economics studies the influence of psychological, cognitive, emotional, cultural, and social factors on individual decision-making. Organizational behavior refers to the fact that the behavior of an individual when assuming an organizational role differs from the behavior of the individual when separated from the organization, and its principal objective is to develop better organizational life. The objectives of the present invention include formation, representation, computational modeling, analysis, learning, simulation, and understanding of individual and group behavior, behavioral influence, utility, and non-occurring behavior, so as to perform behavioral intervention and management.

All of these are results obtained on the basis of analysis of capacitance change data between articles and persons, between articles and the environment, or between articles and articles. In the overall system, capacitance sensing variation values generated by interactions among articles on the user's body, nearby articles, non-nearby articles, and the environment are used to collect activities of articles, the environment, and the user, and to capture activities of an individual or changes in the surrounding environment of the individual. These capacitive signals are transmitted to a computer system that executes a learning program. The learning program constructs a personalized behavior and external environmental state model, and further develops one or more customized multidimensional prediction models and uses the multidimensional prediction model to predict possible future behaviors and to provide notification of predicted unsafe or undesired results.

As shown in FIG. 1, for example, before exercise, dynamic stretching warms up and stretches muscles throughout the body, activates the muscles of the whole body, and can also recalibrate data in standard databases between the person and original articles such as clothing, trousers, socks, and shoes. Some correction can be performed, and then behavior detection between wearable articles and the person can begin. The structure of the ball illustrated in FIG. 1 is merely schematic. Similarly, it may be changed to a car, where the articles are a steering wheel, a seat, a brake, an accelerator, a gear shift, and the like. When eating at a dining table, the articles may be a table, a chair, and tableware. When sleeping, the articles are a bed, a pillow, a quilt, and the like. The characteristics of a capacitive sensing article are first described. When both hands approach a conductive region of clothing on the body, for example when the chest or abdomen approaches, the sensed capacitance value between the chest and abdomen also increases. When both hands touch the clothing, the capacitance value becomes even larger. As the force applied by both hands becomes increasingly greater, the capacitance value also rises. A single hand striking the electrode region of the clothing can be used as sign language. In addition, when any person or other article touches the user, electrodes on the clothing or skin of the user generate corresponding capacitance changes, and these changes can all produce behavior pattern analysis and processing of the user, another person, or an article.

For example, when the weight of the human body is fixed and the left and right feet wearing socks are inside shoes, the capacitance value of a conductive region at the bottom of the socks also increases because the socks are in a closed space. The increased value is caused by changes in temperature and humidity of the feet. In particular, an increase after the capacitance value becomes balanced indicates that humidity changes are generated in the shoes during movement of the feet. Thus, gait analysis and humidity changes can be measured at the same time. Since the temperature of the feet is not likely to change greatly at this time, more information can be obtained during exercise not only from capacitance sensing changes at joint regions, thereby observing the behavior pattern. After each exercise session, stretching should be performed. Stretching can lengthen tight muscles, improve muscle elasticity and activity, and help increase the range of motion of the joints, thereby reducing subsequent injury. This also allows the database data of articles such as clothing, trousers, socks, and shoes to be calibrated again.

When performing these operations, the positions, times, and forces of contact between the hands and feet and the body can be recorded, thereby forming database calibration for subsequent behavior pattern analysis and processing. Conductive cloth contacting the skin is generally used as a reference ground. As long as the location is stable and can directly contact the skin during movement without separation, only one metal button is needed. Conductive cloth on trousers may serve as the reference ground. When the conductive cloth surrounds the waist, the area becomes large, and if there is no clothing insulation, all sensing points on the entire body can be obtained without difficulty. The reference ground is stable. However, if clothing is present on the inner side of the trousers, the reference ground does not directly contact the skin, and the changes at the sensing points include changes generated by the reference ground. A large-area conductive material is therefore needed as the reference ground because the electrode of the reference ground does not contact the skin. For example, when the knee is standing still, a value of 200 pF is measured at the knee. However, when clothing is present on the inner side of the trousers, 166-175 pF is measured, which is caused by changes in the trouser waist reference ground due to respiration. If the conductive cloth reference ground is only on the rear half of the waist rather than having silver cloth around the entire waist as the reference ground, the measured result is 97-100 pF. This variation is caused by respiration because respiration is mainly in the front abdomen, while the rear back changes little. Therefore, a more stable result can be found.

By the same principle, when a person sits on a chair, the buttocks, which do not contact the skin directly as a reference ground, provide the largest area. When both hands hold the steering wheel without moving, the measured capacitance change at the hands is a movement of the buttocks. For example, when the foot presses the accelerator or brake, the change of the buttocks is involved, because the reference ground is separated by a material rather than directly touching the skin. Changes at this position may produce noise at other sensing points. The noise can be filtered out, and the signal of the reference ground, that is, the movement variation of the buttocks, can also be obtained. If another reference point needs to be used as the reference ground, a processor is used to switch to the new reference point. Therefore, changing the reference ground can obtain a better and more stable signal. That is, the circuit design can switch the position of the reference ground. In addition, a sensing electrode that does not contact the skin must fit closely to the body; otherwise non-linear problems may occur. For example, when the knee is straight, the value is 350 pF, but when bent it becomes smaller because the conductive cloth is twisted and does not completely adhere to the knee, resulting in 320 pF. Only when the knee is bent by 30 degrees is 350 pF obtained, and then there is no problem. As the bending angle increases, the capacitance value also increases synchronously. Therefore, if there has been no problem previously but a non-linear effect suddenly occurs, it indicates that the sensing electrode cloth at this location that does not contact the skin is not perfectly fitted to the skin. The user may be asked to adjust it, to determine whether it is worn in a non-standard position, whether the fabric in the sensing region has degraded, whether the body shape has become smaller, or whether something is present on the skin.

For example, information from a wristband is recorded in the database, so that when the same condition occurs next time the cause can be known. This makes behavior pattern analysis and processing more complete. The original capacitive sensing function can detect the distance between an article and a person or another article, but generally only within about 10 centimeters. Therefore, electrodes on the article and the skin may be provided with an inductive function to detect the distance between an article and a person or between an article and another article, thereby achieving detection at a distance of 20 centimeters. In addition, a 9-axis acceleration sensor, a camera, and a GPS positioning system may be used to enhance the effect of detecting behavior and environmental changes.

A preferred embodiment is set forth below. Referring to the drawings, the drawings illustrate the method and system of the present invention for detecting user behavior and external environmental changes using a capacitive sensing principle. The system includes at least one article, at least one conductive region disposed on the article or on a body, and a circuit for providing a signal.

A paper presented at ICCE 2024, entitled "A smart capacitive sensing garment can detect respiratory signals in various situations," states that a wearable capacitive-sensing garment can monitor breathing at any time and in any situation, whether during physical activity, sleep, or even work, representing a significant advancement. The value of this innovative device lies not only in continuous monitoring, but also in its non-invasive and comfortable design. Such a breakthrough smart garment may revolutionize treatment for respiratory-related diseases. For patients with asthma, chronic obstructive pulmonary disease (COPD), or other respiratory disorders, a discreet and effective monitoring system may provide unparalleled insight into breathing patterns, allowing individuals to continue daily activities without obstruction or awareness of embedded sensing elements. It may also change how medical monitoring is seamlessly integrated into daily life and lay the foundation for more comfortable, unobtrusive, and effective preventive healthcare solutions. Different capacitive garments may be used for respiratory monitoring under various all-day conditions, for example during sleep, work, or exercise. Since the sensing silver fabric is provided in the clothing, the wearer does not feel discomfort. It can monitor breathing twenty-four hours a day.

When sleeping, pajamas should be comfortable and one size larger; therefore, the values during supine sleeping and side sleeping are different. At the same time, the capacitance value is very small because direct contact with the skin may be absent. However, when a blanket is covered over the body, the values increase. The value during prone sleeping does not change; as long as the user is asleep, it remains stable. Otherwise, when the user is not sleeping, even slight movement generates noise. This can be used to evaluate sleep quality. In addition, it can provide information regarding respiratory rate variability (RRV), which reflects a response of the parasympathetic nervous system.

As shown in FIG. 2, abdominal respiratory signals are respectively shown for supine, right lateral, and left lateral positions. It can be observed that the signal in the supine position is the largest, followed by the right lateral position and the left lateral position. The last image combines all three signals, and it is apparent that the signal in the left lateral position is much smaller. This result indicates that respiratory information can still be obtained under different sleeping conditions. From the baseline of abdominal capacitive sensing alone, standing and sitting can be distinguished because the abdomen is smaller when standing and becomes larger when sitting. When measurements are taken while wearing a shirt or work clothes, the data are unstable because the clothing does not fit tightly against the skin. In addition, whether an undershirt is worn also affects the data. However, when there is no movement, the respiratory signal is clear.

At the same time, in FIG. 2, the time and frequency of breathing cessation can be measured because the capacitance value at that time is the lowest and closest to 0 pF, and there is almost no change, only a parallel-line state.

As shown in FIG. 3, compared with abdominal breathing, chest breathing is less apparent. A respiratory signal during speech is different from a respiratory signal during no speech, but speech generally involves breathing. Therefore, it is feasible to measure the respiratory rate according to an inhalation curve. A person who has undergone breathing training exhibits a clear respiratory signal while walking because the breathing remains stable. In contrast, most people exhibit irregular and shallow breathing while walking. When wearing sportswear, the clothing closely fits the body, resulting in a larger capacitance value, as shown in FIG. 4.

In addition, during physical activity, respiratory signals continue to be detected. If the measurement result is not optimal, it indicates that the person's breathing requires further training. However, the breathing rhythm should not be disrupted by physical activity. In different fields, during breathing training, a fixed ratio between exhalation and inhalation should be maintained, and exhalation should be slow and controlled. Therefore, respiratory signals during exercise are used to evaluate the progress of a person's breathing training. The system can monitor respiratory signals under various circumstances and has great potential for both personal and clinical applications. For individuals engaged in practices such as yoga or meditation, a capacitive-sensing garment can provide real-time feedback regarding breathing techniques, helping them achieve deeper and more controlled breathing. In addition, athletes and fitness enthusiasts can use this technology to obtain insight into changes in their breathing patterns under different exercises and intensities, thereby optimizing training results. This innovation has the ability to change personal health management and improve performance in various activities and disciplines. The respiratory monitoring function of the capacitive-sensing garment can be used to evaluate a patient's respiratory patterns during sleep, exercise, or daily activities. It can assist in diagnosing respiratory diseases or monitoring progress of a recovery plan. In addition, data collected by the garment can be integrated with other health monitoring systems to provide a comprehensive view of an individual's overall health condition. Such integration may enhance clinical assessment, enable early intervention, and contribute to a more comprehensive patient-care approach. Here, as a user sweats due to exercise, the sensed capacitance of breathing increases; that is, the respiratory waveform remains unchanged, but the baseline of breathing rises, and the respiratory frequency often increases as well, unless the user is a trained athlete, as shown in FIG. 5.

As shown in FIG. 8, it is a waveform diagram of movement of both knees. Here, it can be seen that during movement of the left and right knees, not only the applied force but also the timing of the applied force is different. The waveform on one side is wider, indicating that the time of forceful bending is longer.

By the same principle, the results of gait analysis detected using socks and insoles are shown in Table 2.

Both the socks and the insoles include a piece of conductive material, such as silver fabric, under the front toe region and the heel region, without contact with the skin. In the case of an insole, a full sheet of conductive material may further be provided in or at the bottom of the insole as a reference ground.

In addition, capacitance measurements of different test subjects at the same position are very close, which indicates that the multi-point sensor garment can quantify different postures. It is important to note that, during three consecutive cycles of the same motion, all signals remain significantly consistent. This indicates that the garment having multiple conductive electrodes provides reliable and quantifiable capacitive sensing at various body positions and during various movements. In summary, these preliminary results emphasize the effectiveness of the multi-point capacitive-sensor smart garment in quantifying capacitance changes associated with different body postures and movements, and in developing applications in fields such as healthcare and fitness monitoring.

The ability of the multi-point capacitive smart garment to capture key signals and signals from multiple body positions is a significant advantage of the smart garment. It provides a database for a wide range of applications, including exercise, posture analysis, respiration, gait monitoring, gesture recognition, healthcare, sports performance analysis, and human-machine interaction. This understanding of real-world body movement and position provides valuable data for various industries and fields. For example, smoking behavior can be analyzed: when smoking, an elbow is necessarily bent, and inhalation and exhalation are performed through the mouth, so the respiratory waveform is substantially different from ordinary nasal breathing. Inhalation during smoking involves exertion, whereas ordinary breathing does not show such an exerting action. In addition, smoke exhalation is not accompanied by speech, and the exhalation waveform is comparatively steady. Ordinary speech occurs during exhalation, and the speech waveform is irregular. Therefore, the system can detect when the user smokes, smoking duration, inhalation duration, exhalation duration, and the number of times the user smokes per day. Mobile phone use or telephone conversation can also be distinguished. A user normally breathes through the nose, and temporary changes to mouth breathing or nasal inhalation with oral exhalation generate different respiratory waveforms. When typing on a mobile phone, both hands are used and at least one hand is performing an action, which can identify the commonly used hand. During a phone call, the elbow is bent and the mobile phone is generally near the ear. During speech, the respiratory waveform exhibits uneven upward and downward fluctuations, whereas ordinary exhalation has rhythmic and regular waveform variation. Thus, the speaking time and number of speaking events in respiration can be known, and emotional state during speaking can also be obtained. For example, during an argument, speech is rapid and respiratory frequency increases. Singing and speaking also have different rhythms, because ordinary daily behavior involves speaking rather than singing; singing requires stronger breathing and a waveform different from ordinary speech. Speaking during exercise is also different from ordinary speaking because the respiratory frequency increases and speaking involves greater exertion. Swallowing saliva and breathing may also be distinguished because breathing stops when swallowing occurs, and the respiratory waveform is interrupted. Thus, the relationship between swallowing and breathing can be known. Eating behavior can also be distinguished: when eating, saliva secretion is increased, swallowing frequency increases, and respiration becomes irregular because breathing is often temporarily stopped during chewing. When drinking water, coffee, or other beverages, there is often more than one consecutive swallowing event. During sleep, respiration becomes slower, swallowing decreases, and the respiratory pattern becomes more regular. Waveforms corresponding to sleep apnea or coughing during sleep are also different from normal respiration; coughing involves forced exhalation and often produces continuous large exhalation movements in the abdomen and chest. The ability to capture such signals provides applications including posture analysis, respiration, gait monitoring, and gesture recognition, and may be used in healthcare, sports performance analysis, and human-machine interaction. The concept behind the smart garment is to convert subtle movements and respiratory patterns into database information through embedded sensors in the garment. When an individual performs yoga or similar activities, the sensors can instantaneously monitor changes in body posture and breathing rhythm. Through intelligent analysis of the data, real-time feedback and guidance can be provided to help the user maintain correct posture and achieve optimal breathing.

A third embodiment was published at ICCE 2024 under the title "Wearable system for monitoring breathing and walking that comprises textile-based capacitive sensors at multiple positions." Moderate exercise can improve physical fitness and promote overall health. Walking is an aerobic form of exercise that can be easily performed without being limited by location, and can improve health and cardiovascular function. A grounded capacitive garment and an electrode insole including silver fabric not directly contacting the skin and serving as a reference ground are used to measure capacitance changes during movement of a wearer. This measurement can obtain respiratory and walking waveform signals, and the signals are recorded and stored for subsequent signal analysis, processing, and application. As shown in FIG. 13, when a young person walks at different speeds, synchronized chest and abdominal waveforms are obtained. The abdominal respiration is measured using a self-developed system.

In this embodiment, both hands approach two pieces of conductive fabric covered by non-conductive fabric, and then both hands press on the fabric with force. The capacitance values are then presented using a sunrise-and-sunset video. It can therefore be imagined that a gaming platform presents a synchronized sunrise and sunset scene corresponding to the hand gestures of a player, thereby achieving a calm state and stabilizing emotion through gentle and steady movements.

The design concept behind this game is to immerse the player in a calm and relaxed state. The capacitive sensing technology captures subtle movements of the player's hands, and these movements are synchronized with sunrise and sunset visual effects in the game. Through this interactive manner, the player can achieve emotional stability and relaxation by participating in slow movements coordinated with the natural scenery depicted in the game. The same plastic cloth can also be used to measure training in which the buttocks approach and slowly press downward, thereby training muscles of both legs. In addition, it can assist training and detection effects in capacitive sensing on a basketball or another article contacting a person. For example, when a capacitive sensing electrode in an insole does not contact the foot, and each insole has two parallel electrode plates, gait analysis can be measured. FIG. 15 is a waveform diagram in a walking state. FIG. 16 is a waveform diagram in a running state. It can be observed that, during walking, the force values when the left and right feet contact the ground are different, but during running, the waveforms and values of the left and right feet are similar. This indicates that the wearer has a balance problem during walking and tends to one side, or that deformation of the sole may have produced an influence, which should be checked. Therefore, the state of the article can also be verified.

The design concept behind such a game is to immerse the player in a calm and relaxed state. The capacitive sensing technology captures subtle movements of the player's hands, and the movements are synchronized with sunrise and sunset visual effects in the game. Through this interactive manner, the player can achieve emotional stability and relaxation by participating in slow movements coordinated with the natural scenery depicted in the game. The plastic cloth may also be used to measure training in which the buttocks approach and slowly press downward, thereby training muscles of both legs. It can further assist training and detection effects in capacitive sensing on a basketball or another article contacting a person. For example, when a capacitive sensing electrode in an insole does not contact the foot, and each insole has two parallel electrode plates, gait analysis can be measured. FIG. 15 is a waveform diagram in a walking state. FIG. 16 is a waveform diagram in a running state. During walking, the force values when the left and right feet land are different, but during running, the waveforms and values of the left and right feet are substantially the same. This indicates that the wearer may have a balance problem during walking and may lean to one side, or that deformation of the sole may have an effect, which can be checked. Therefore, the state of the article can also be verified.

Changes in capacitive sensing values can be used to measure the activity of an individual and related interactive articles, or to capture changes in the surrounding environment of the individual or the article. The activity of the individual and the related interactive articles, or the surrounding environmental changes of the individual or the article, can be explained using gait analysis. For example, gait analysis generated by socks, shoes, or insoles includes action and reaction forces among joints of the body, and changes generated by sensors at other positions such as the chest and abdomen. In summary, articles near the body and body electrodes are affected by walking and generate information detected by sensors on the articles or the body. In particular, the information includes action and reaction forces between both feet or a single foot and the ground surface. It is also possible to analyze responses of all articles on the body, such as clothes, hats, handbags, glasses, watches, mobile phones, handbags, trousers, and the like, when the articles have capacitance sensors. Thus, it is possible to know the influence of force on each joint, other body articles having electrodes, and body electrodes under different gait conditions. These can all be analyzed from sensed values of sensing electrodes on the body itself or on articles at related positions. This information may be caused by stepping on the ground. Likewise, capacitance changes can be generated by force applied by a hand or another body part to the outside, affecting joints of the whole body and sensed capacitance values of articles or body electrodes at positions having sensors, such as throwing a ball by hand, boxing, weightlifting, playing baseball, badminton, or tennis, or the body impacting another article or person, such as hitting another person, suppressing another person, jumping into water, or flipping in the air. External forces are also included, such as another person using a hand or foot to apply force to an article on a body part, a body electrode itself, or a nearby article, such as clothing, trousers, or an article at the same position, including a glove, waist support, or backpack having a capacitance sensor. In the same manner, the body may be struck by a vehicle, hit by a stick, or hit by a stone, causing sensing by body electrodes or changes in sensed values of nearby article sensors. In other words, force application or force reception can cause capacitance sensing changes between body electrodes and sensors of other articles. It is also possible that another person or an animal applies force to body electrodes or articles near the body, causing changes in capacitance sensing values. Capturing changes in the surrounding environment of an individual or article refers to surrounding changes, such as rain, sunlight, snow, an air-conditioned room, water, air, earthquake, elevator riding, going upstairs or downstairs, walking on a beach, walking on grass, crowding in a bus, air quality in a work environment, noise, sewage, sludge, radiation, and the like, which generate capacitance sensing changes in the body itself or in an article.

Key point 1: rapidly lower the body's center of gravity, land on the outer side of the thigh and the lower waist/hip side, and avoid falling forward.

Key point 2: simultaneously lift both poles and forcefully straighten both legs. In addition, a full-braking stopping technique may include the following:
(1) gliding in a straight downhill posture; (2) applying force to the heels, forming the two boards into an "eight" shape, placing the center of gravity between the feet and forward, pushing the rear ends of the skis outward, applying force with the inner edges to engage the snow surface gradually, and continuing until the speed of the skis stops.

3. The body bends downward along with the pushing-out movement of the skis, including bending of the knees.

4. Both knee joints are bent and turned inward, but the knees are not clamped inward.

5. If the center of gravity is shifted rearward, the scraping action of the front ends of the skis against the snow will be less apparent.

In this way, the skiing behavior pattern can be detected, analyzed, and used to establish a behavior model.

If a single board is used, then two shoes are located on one board, and the capacitance variation between the feet and the shoes, and between the board and the snow, can likewise be used to detect a skiing behavior pattern. If four wheels are provided under the board, each wheel may serve as a conductive electrode, and the behavior pattern can likewise be detected. Ice skates, also referred to as ice-skating shoes, use the principle of reducing friction for skating. They are usually designed by adding a thin blade to the sole, so that the shoe can move very easily forward and backward on the ice surface. Accordingly, a plurality of conductive regions may be provided inside the shoe to measure capacitance changes generated by movement of the foot relative to the electrodes inside the shoe. Alternatively, a small conductor may be provided near the front and rear portions of the blade, so that capacitance changes between two conductors and the snow or ice can be measured. In this way, movement changes of the ice skate can also be measured, and, by further connecting capacitance sensing of articles worn on the body, such as clothes and trousers, the user's ice-skating behavior pattern can be detected.

It is further noted that soil moisture has a significant influence on the dielectric properties of soil: the dielectric constant of water is 88.2 at 0°C, the dielectric constant of air is about 1, the dielectric constant of soil particles is 3 to 7, and the dielectric constant of ice is 3.27. During a baseball sliding action, both feet do not leave the ground, but the center of gravity of the body shifts, so that the capacitance value between the sole and the ground surface decreases. In addition, during skiing, if the ski board is merely a board, the capacitance variation between the foot and the shoe, or between the shoe and the ski board, is required. A conductive region provided at the bottom of the board, similarly to a sole, can be used to detect the gait of skiing. When the skier is in the air, the ski board does not contact the snow. When the ski board is on the snow, the ski board may be divided into front and rear portions and left and right conductive regions for detecting gait behavior analysis. In double-ski skiing, and also in sledding, the hand-gripping condition on the upper portion of the sled and the capacitive interaction between the lower portion of the sled and the snow can be used to obtain whole-body skiing movement capacitance-change data. For example, for a beginner skier, falling is unavoidable, and therefore safe falling technique is important.

Key point: 1. Rapidly lower the body center of gravity, land on the outer side of the thigh and the lower waist or hip side, and avoid falling forward.

2. At the same time, raise both ski poles and forcefully straighten both legs. In addition, the full snowplow braking and stopping technique includes: (1) gliding in a straight downhill posture; and (2) applying force to the heels, forming the two skis into a figure-eight shape, placing the center of gravity between the feet and forward, pushing the rear ends of the skis outward, and using the inner edges to engage the snow surface gradually with force until the speed of the skis stops.

3. The body bends downward along with the pushing-out movement of the skis, including bending of the knees.

4. Both knee joints are bent and turned inward, but the knees are not clamped inward.

5. If the center of gravity is shifted rearward, the scraping action of the front ends of the skis against the snow will be less apparent.

In this way, the skiing behavior pattern can be detected. If a single board is used, then two shoes are located on one board, and the capacitance variation between the feet and the shoes, and between the board and the snow, can likewise be used to detect a skiing behavior pattern. If four wheels are provided under the board, each wheel may serve as a conductive electrode, and the behavior pattern can likewise be detected. Ice skates, also referred to as ice-skating shoes, use the principle of reducing friction for skating, and are usually designed by adding a thin blade to the sole so that the shoe can move very easily forward and backward on the ice surface. Accordingly, a plurality of conductive regions may be provided inside the shoe, and the blade may be used as a reference ground to measure capacitance-value changes generated by movement of the foot relative to the electrodes inside the shoe. Alternatively, a small conductor may be provided near the front and rear portions of the blade, so that capacitance changes between two elements and the snow or ice can be measured. In this way, movement changes of the ice skate can also be measured, and capacitance sensing of articles worn on the body can also be connected to detect the user's ice-skating behavior pattern. The above embodiments illustrate capacitance changes generated during contact between the user and a reference ground, and also make it possible to know environmental changes such as soil, carpet, tiles, or roads.

Sixth embodiment: a person wears clothing from birth. When someone holds an infant with both hands, and two pieces of conductive material, such as silver fabric, are provided on the outside of the clothing, the case may be divided into a condition in which both hands directly hold the infant. This is similar to the infant's weight being directly applied onto both hands, and the main reading is the capacitive sensing between the hands and the conductive silver fabric, approximately 10 nF. The amount of change is proportional to the weight and movement of the infant, and the change is about 1 nF. If the conductive material is located in the middle of the infant's clothing, the capacitive sensing between the hands and the infant is measured, approximately 1400 pF, with a change of about 400 pF. If the thickness between the hands and the clothing increases, for example when the infant wears a padded jacket, the measured value is about 1100 pF, and the main sensing is the capacitive sensing between the infant and the conductive electrode, with a change of about 100 pF. When the infant sweats or urinates, the measured capacitance value will also increase greatly. If the infant has wet the diaper, the diaper should be changed, and therefore the clothing will be lifted. At this time, the hands are no longer on the infant; instead, the infant is placed on a bed to change the diaper. This produces different capacitance changes between the hands and the clothing and between the clothing and the infant. Thus, when the capacitance value of the infant suddenly increases significantly, it is possible to predict that the infant is wet. If the prediction is correct, the diaper will be changed. This involves an antecedent and a consequence, and it can also be understood whether a nearby person changes the diaper after the infant has urinated, the speed and steps of the diaper change, and whether the relative is familiar with the action or is changing the diaper for the first time. In addition, if the infant is held against the body, the measured value of the respiratory sensing electrodes on the chest or abdomen will increase. Similarly, if the infant is carried on the back, the capacitance value of the electrode sheet on the back of the clothing for measuring spinal bending will increase. The same principle applies to interactions between a user and animals, for example, interactions between cats or dogs and a person, such as a cat lying on the body or a dog licking the hand, which also produce a capacitive effect.

Seventh embodiment: when a user gets up at night and the upper body is not wearing clothing, no capacitance change is measured on the upper body. However, the user should be wearing underwear, and after getting up the capacitance value of the buttocks becomes smaller. If the user wears capacitive-sensing slippers, whether the electrodes are disposed on the sole or on the insole, foot movements can be measured and capacitance changes will be generated. When getting up at night to go to the toilet, the user normally removes the underwear, producing a condition of not wearing trousers. After urination, the underwear is put back on, producing a capacitance change corresponding to putting on the trousers. During this process, standing urination and sitting defecation generate different capacitance changes at the slippers under the feet. When standing, the capacitance value is the same as during the day. When sitting on the toilet, the center of gravity is placed on the toilet, and the capacitance value of the slippers becomes much smaller. After sitting, the user stands up again, and at that time the capacitance value between the slippers and the feet is restored. The user then walks back to the bed and lies down to sleep, at which time the capacitance value of the buttocks is restored, and the capacitance value of the slippers disappears. This series of activities has antecedent-and-consequence relationships. If such events occur every night and their frequency increases, it indicates a possible problem in health condition and daily routine.

In all of the foregoing embodiments, it is also conceivable to measure an electrocardiogram. Similarly, the electrode region may also be used to monitor heartbeat, brain waves, electromyography (EMG), body fat, sweat, or may be used as an electrode for generating transcutaneous electrical nerve stimulation (TENS), an automated external defibrillator (AED), heating, or cooling. Electrode fabric may be provided on a chair back. When the body does not contact the electrode fabric, the measured value is 200 pF; when the body contacts 30% of the electrode fabric, the measured value is 840 pF; when the body contacts 50%, the measured value is 1400 pF; when the body contacts 70%, the measured value is 2 nF; and when the body contacts 100%, the measured value is 2.4 nF. Thus, the body posture of a driver can be known. In addition, an electrode may be provided on a headrest. When the head does not touch the headrest, the measured value is 50 pF; when the head touches the headrest, the measured value is 90 pF; and when the head is completely placed on the headrest, the measured value is 110 pF.

Therefore, when shoes are not worn, the gait analysis measured in this manner is the most accurate method. However, an insole and a shoe sole may have incomplete contact because the relationship between a shoe and a foot is not a complete fit, and therefore the authenticity of the measured result is not perfect. If an insole is used to measure gait analysis, the non-contact sensed capacitance value described in the fourth example above may also be used for correction, which is similar to the sensing function between both hands and conductive fabric disclosed above. However, when sensing is implemented on a shoe sole, inaccuracies may occur, and an acceleration sensor, a camera, or the like may be used to calibrate the data, thereby obtaining more accurate information. With respect to calibration data, the foregoing method may be used. For example, a gait signal generated between a conductive region on the surface of the insole and the sole of the foot may be measured, and a capacitance value generated when there is no capacitive sensing between the insole or shoe sole and the person may also be measured. The two sets of measured data should be completely positively correlated; otherwise, calibration should be performed. Another function is measuring the magnitude of force. When the sensing range of the electrode contacting the foot has exceeded a range and no longer changes, an outer electrode may be used to supplement and obtain force data, because different materials may be selected to produce different capacitive response values, especially when the region between the electrode and the skin becomes saturated due to perspiration or moisture. Similarly, on clothes or trousers, the capacitance value detected by a close-fitting electrode on the garment and the capacitance variation generated by force applied to the corresponding electrode on an outer garment layer should also vary in a synchronously positive correlation; otherwise, calibration should be performed. Likewise, the magnitude of force can also be completely measured, because there is a second layer of database for analysis and calibration. Similarly, an electrode on the body can also assist in calibrating an external article, and the sensed capacitance value of an external article, such as clothes, trousers, shoes, or socks, can also measure the magnitude of force. The direction of the force, whether generated by the body or by the external environment, can also be distinguished because the order in which each layer is subjected to force is different. For example, during walking, whether the foot first contacts the insole or the shoe sole first interacts with the ground can reveal the fitting relationship between the foot and the shoe. In addition, when an electrode conductive region and transmission line on an article or on the body experience signal attenuation due to washing or use, electronic compensation may be used. For example, if the value for elbow bending was originally 100 pF and has now become 50 pF, correction may be performed in the database, thereby allowing products such as clothes and trousers to be continuously used, because each sensing electrode is corrected in the database over time. Gait is again used to explain behavior detection. When an insole or a shoe has a capacitive sensor, gait analysis can be performed, including gait behavior, left-right foot balance, and changes in the center of gravity of the body. An acceleration sensor may be added so that taking an escalator or elevator can be known. When the sensed capacitance value varies greatly depending on whether shoes are worn, a start switch may be designed such that a switch is provided on one conductive sensing region, and the system begins to operate when force reaches a certain level. When no external force is sensed, for example when the user removes the shoe, the system may start and stop operation to save power, while also recording a behavior pattern indicating when the system is used and when it is not used. Preferably, if a Global Positioning System (GPS) is further installed, the gait trajectory of the user can be displayed, which is very helpful for elderly persons who may get lost. Preferably, if a camera is further installed on the shoe to monitor external conditions, the changes between the user and the external environment during gait can be completely sensed.

During interaction between all electrode sheets in the foregoing articles and the user or other articles, there may be instances in which contact between an electrode serving as a reference point and the body or another article is poor. In such a case, another electrode sheet should be selected as a new reference electrode to serve as the reference ground. The circuit design is shown in FIG. 20.

Behavior informatics (BI) in the present patent is directed to capacitive-sensing information research for behavior, so as to obtain behavioral intelligence and behavioral insight. It is a method integrating science and technology by using capacitance-variation data among an article and a person, among articles, and between a conductive electrode on a person and an article or an environment. The purpose includes analyzing a current behavior and inferring a behavior that may occur in the future. This is achieved through pattern recognition. In other words, electrodes are provided on the skin of a user, or an article worn by the user or an article in proximity to the user is used, and capacitance variations between the article and the human body, between articles, or between a skin electrode and an environmental article are used for analysis.

Preferably, the system has a computer system connected to the capacitive sensor and executing a multidimensional responsive learning routine. Data from the capacitive sensor reflects habits, activities, and/or positional changes of a behavioral individual and the order in which they occur in the individual. The learning routine constructs one or more individualized behavioral dynamic state models for the individual, as well as transitions among different states.

Preferably, the learning routine also develops one or more customized multidimensional predictive models for the individual, and uses the multidimensional predictive models to predict behaviors that may occur in the future, so that a notification system issues a notification or warning according to the prediction for behavioral or activity changes associated with unsafe or undesired results, and transmits the notification or warning to the individual or an associated recipient.

Preferably, the external environment includes changes in temperature, humidity, a material on a ground surface, or an intervention of an external force.

Preferably, an article and a body, or an article and another article, directly or indirectly contact conductive regions, so that a capacitance is formed therebetween.

Preferably, the article includes an article contacted by a human body, such as clothes, a hat, trousers, a mask, socks, shoes, a bed sheet, a pillow, gloves, glasses, a watch, a bracelet, a backpack, a purse, luggage, a shopping basket, a handbag, a snowboard, skates, a surfboard, sports equipment, a toothbrush, a cigarette, a pen, a computer, a mobile phone, a vehicle, a ball, a tire, a steering wheel, a cane, a tablecloth, a chair, a carpet, slippers, an insole, a seat belt, or an artificial product, including a robot, an artificial limb, a prosthetic eye, and a prosthetic ear.

Preferably, when the system detects capacitance-value sensing variations generated by interactions between the user and articles on the user, articles near the user, articles not near the user, and the environment, the system collects activities of the article, the environment, and the user, and captures activity of the individual or changes in the surrounding environment of the individual.

Preferably, a sensing response of a bed corresponds to capacitive sensing of sleepwear trousers, and both may mutually confirm and calibrate the database.

Preferably, the article is the upper and the sole of a shoe, which can measure gait analysis of the user and an interaction relationship on a soccer ball, thereby sensing the behavior of a soccer player.

Preferably, analysis of the data is used for forming and representing individual and group behavior, computational modeling, analysis, learning, simulation, and understanding behavioral influence, utility, and non-occurring behavior, so as to perform behavioral intervention and management.

Preferably, when an electrode of the reference ground of the article does not contact the skin, if a portion of the article sensing region does not change, the measured capacitance value is the change in the position of the reference ground. For example, when the knee is standing still, the measured knee value is 200 pF; however, when clothes are inside the trousers, the measured value is 166 to 175 pF, which is caused by variation of the trouser-waist reference ground due to respiration.

Preferably, the capacitive sensing analysis may be enhanced by adding an inductive function between the electrode of the article and the user, a nine-axis acceleration sensor, a camera, or a GPS positioning system to improve detection of behavior and environmental changes.

Preferably, the article is clothes, trousers, socks, a baseball, a bat, and a shoe sole. A conductive region of the shoe sole can measure gait analysis of the user. Because different ground-surface materials produce different capacitance variations, the material of the ground surface can be known. During a baseball player's sliding action, both feet do not leave the ground but the center of gravity of the body shifts, and the capacitance value between the shoe sole and the ground decreases. A pop-up slide is a type of slide in which the runner slides directly toward the base and is ready to rise and advance at the first opportunity. If the defensive player does not catch the ball securely, the runner can immediately run the bases. Especially when the base also has a conductive region and a control system, and when the baseball or bat also has a conductive region, the entire process of a baseball game can be recorded and analyzed perfectly.

Preferably, the skin electrode itself may also have a control circuit for sensing capacitance variation of the outer clothing or the like. The skin electrode itself may generate capacitance variation due to the skin electrode expanding or contracting when the body bends, expanding or contracting during respiration, external environmental pressure or tension, environmental temperature or humidity, and changes in body humidity or temperature. In this way, capacitance variations at different body positions can be measured, and capacitance variations between other positions can also be measured. For example, when the left leg is lifted onto the right leg or the left hand is placed in front of the chest, physiological information such as respiration, posture, humidity, and temperature can be measured, behavior pattern analysis and processing can be obtained, and functions of the electrode itself, such as measuring blood glucose, lactate, glucose, caffeine, and alcohol, can also be directly measured.

Preferably, the articles are tires of automobiles, bicycles, and motorcycles. The tires have sensing electrodes and control circuits for detecting the condition and variation of the tires, and at the same time external ground conditions can be known. For example, if one of four automobile tires leaks air, the capacitance value measured by that tire differs greatly from its original value, and the capacitive sensing values of the other three tires also differ. Thus, the system can be used as a tire-pressure detector. At the same time, the ground contacted by each tire may be different, so that ground conditions can be known. Driving conditions may also be changed to ensure driving safety. For example, when a front wheel passes over a pothole, if the force generated when the vehicle passes over the pothole is large, the result when a rear wheel passes over the pothole can be recorded, so that when a similar condition occurs next time the system can know how to handle it. When the tire senses that the ground material is different, the driving manner can also be adjusted. Gravel, asphalt, and rainy road surfaces have different friction coefficients, and the driving manner should also be adjusted. The interaction relationship between the tire and the driver can also evaluate the physical strength and mental state of the driver. On uphill and downhill sections, tire-pressure capacitive sensing values are also different: when beginning to go uphill, the capacitance value of the front wheels first increases, and when beginning to go downhill, the capacitance value of the front wheels first decreases. If double solid yellow lines on the ground are used to divide the road into two-way lanes, vehicles are prohibited from crossing them and from making U-turns. When the double solid yellow lines have a different dielectric constant or are made of conductive material, tire contact with the lines will be recorded and the driver should be notified. Similarly, when sitting on a capacitive chair at work or lying on a capacitive bed, the posture and mental state of a person can be measured. Likewise, values measured on clothes and trousers and capacitive sensing values measured on a bed or chair having conductive electrodes and a control circuit can mutually calibrate the database.

Preferably, during interaction between all electrode sheets of the article and the user or another article, when the capacitance value between an electrode serving as the reference ground of a reference point and the body or another article is unstable, another reference electrode is selected again to serve as the reference ground.

Preferably, the articles include personal articles, such as a helmet, a safety helmet, a hat, a swim cap, clothes, trousers, glasses, a headscarf, a mask, a watch, a bracelet, gloves, socks, a bed sheet, a pillow, an insole, earphones, a ring, and a nail patch, all of which may have conductive regions for measuring capacitance. In addition, non-close-fitting articles, such as a shoe sole, a shoe upper, a backpack, a vehicle, a basketball stand, a soccer frame, the ground, a tire, a ball, a chair, a bed, and electrodes on human skin, are also included. A database can thereby present corresponding capacitive-sensing values for internal-force or external-force actions at different positions and joints of the whole body; motion capacitance variations of other articles; and environmental capacitance variations. Thus, a database can be provided for an artificial intelligence computing system.

Preferably, the skin electrode can also be used to measure physiological information such as electrocardiogram (ECG), electromyogram (EMG), brain waves, body fat, and respiration. A transmission line can also be used for wireless transmission to a receiver, such as a mobile phone. More importantly, for clothes, trousers, socks, hats, masks, and the like, whether close-fitting or non-close-fitting, a conductive electrode on the skin, such as a totem, painting, tattoo, or electrode patch on the skin, can be capacitively sensed by a conductive line at the same position on the clothes. Of course, the conductive line or electrode preferably does not directly contact the skin electrode. That is, the skin electrode is covered by an insulating layer or non-conductive material, or the conductive line or electrode on an article such as clothing is on the side of the fabric not close to the skin. In this way, the fabric sensing circuit can accurately obtain various physiological functions and behavioral information of the human body.

Preferably, the articles are a vehicle, the driver, and articles worn by the driver. For example, conductive electrodes are provided at a steering wheel, a seat, a seat back, a headrest pillow, a brake pedal, a seat belt, an accelerator, and a vehicle door. Under such a system, the behavior and mental state of the driver can be known, and respiration can also be measured. If the driver also wears capacitive-sensing clothes and trousers, mutual calibration can be performed with results measured by the vehicle articles, and a camera may also be used to enhance the calibration function.

The foregoing embodiments are provided to explain configurations and determination logic of the invention in different application contexts. The scope of the invention should be defined by the claims. Equivalent substitutions, modifications, or adjustments made by a person skilled in the art without departing from the spirit and scope of the invention shall fall within the scope of the invention.

## Claims

1. A system that uses the principle of capacitive sensing to detect user behavior and changes in the external environment, **characterized by** comprising: At least one item; At least one conductive zone is set on an object or body; A circuit that provides a single signal; A capacitive sensor is generated between at least one conductive region of the item and the body, between another object, or between the environment or between the conductive zone of the body and the object or environment. Through a capacitor sensor connected in series or parallel, a resistor R, capacitor C, inductor L, operational amplifier, diode, Schmitt trigger, CMOS, transistor, or IC forms a charging or discharge circuit to change the signal range of frequency, period, voltage, or current; When objects and the body, objects to objects, objects to the external environment, or body electrodes to objects, or body electrodes to objects, or body electrodes to the environment; When there is a change in the dielectric constant between the two, such as when the distance changes, or when pressure, tension, torque, or tension changes, or when the force or dielectric constant changes between objects and the body, between objects or between objects and the environment, or between body electrodes and objects or the environment, the capacitance value changes. This signal circuit emits a signal indicating a change in capacitance, which the system receives and measures changes in capacitance, with changes expressed as frequency, period, voltage, or current; and detects changes in user behavior and external environment by measuring physiological changes, posture changes, interactions between the body and objects or the environment or media changes, and between objects and other objects or environments based on changes in capacitance value, capturing the activities of individuals and related interactive objects or the surrounding environment of individuals or objects.

2. The system according to claim 1 that uses the principle of capacitive sensing to detect user behavior and changes in the external environment, **characterized in that** it has a computer system connected to a capacitive sensor and executes multidimensional learning routines, where the data capacitive sensor reflects the habits, activities, and/or positional changes of the individual, as well as the order in which they occur within the individual, is the individual structure Build one or more behavioral personalized dynamic state models and learning routines for transitions between different states.

3. A system using the capacitive sensing principle according to claim 2 to detect user behavior and changes in the external environment, **characterized in that** the learning routine also develops one or more customized multidimensional prediction models for the individual, and uses these models to predict possible future behaviors. The notification system issues notifications, warns behaviors, changes in activity associated with unsafe or unexpected outcomes, and transmits the notification or warning to the individual or associated recipient.

4. A system that uses the capacitive sensing principle according to claim 1 to detect user behavior and changes in the external environment, **characterized in that** the external environment includes changes in temperature, humidity, surface materials, or external forces.

5. A system that uses the capacitor sensing principle according to claim 1 to detect user behavior and changes in the external environment, **characterized in that** an object and a body, or between objects and objects, directly or indirectly contact the conductive zone, thereby forming a capacitor between the two.

6. Using the capacitor sensing principle according to claim 1 to detect user behavior and external behavior A system of environmental changes is **characterized by** items that come into contact with the human body, such as: clothes, hats, pants, masks, socks, shoes, sheets, pillows, gloves, glasses, watches, wristbands, backpacks, leather bags, suitcases, baskets, handbags, skis, ice skates, surfboards, sports equipment, toothbrushes, cigarettes, pens, computers, mobile phones, cars, balls, tires, steering wheels, canes, tablecloths, chairs, carpets, slippers, insoles, seat belts; or artificial products, including robots, prosthetics, prosthetic eyes, and ears.

7. A system that uses the capacitive sensing principle according to claim 1 to detect changes in user behavior and the external environment, **characterized in that** the item and the body or the object provide a circuit with a signal to detect capacitance changes.

8. A system using the capacitive sensing principle according to claim 1 to detect user behavior and changes in the external environment, **characterized in that** the conductive zone of the item or body includes: conductive electrodes directly on the surface of the body skin, inside and outside the skin, or only inside the skin; Items that come into direct or indirect contact with the skin, or those with capacitive sensing between the body and the human body; Items are worn in On the user's body, but without capacitive sensing on the skin, it does have capacitive sensing with the external environment; The object and person are not wearable devices but independent cases; the electrodes of the object have capacitive sensing functions between the wearable item or skin; The object has no interaction with the person, but rather a capacitive induction between two objects that have not touched the body; Interaction between people causes changes in capacitance; Capacitive induction in the electrode zone on floors or carpets.

9. A system that uses the capacitive sensing principle according to claim 1 to detect user behavior and changes in the external environment, **characterized in that** everyone has a wearable item. Before exercise, warm-up stretches the muscles throughout the body, dynamically stretching to activate the muscles throughout the body, while recalibrating the original standard database data between the object and the person, and then performing behavior detection between the wearable item and the person; The items include: clothes, pants, socks, and shoes.

10. A system using the capacitive sensing principle according to claim 1 to detect user behavior and changes in the external environment, **characterized in that** different objects detect capacitive sensing data obtained by the user at the same time, enabling more comprehensive detection and processing of behavior patterns, including: wearing clothes with controllers detecting posture changes, and simultaneously measuring human posture on the chair controller, making behavior pattern analysis more accurate and obtaining more information.

11. The system that uses the capacitive sensing principle according to claim 1 to detect user behavior and changes in the external environment, **characterized in that** it uses objects in different body positions to extract models of behavior and external environmental changes from the capacitance data of each item, and then uses the extracted feature data to perform movements between the human body and objects or between objects.

12. A system using capacitive sensing principles according to claim 1 to detect user behavior and changes in the external environment, **characterized in that** the system detects the interaction between the user, objects on the body, or nearby objects, or unapproached objects and the environment. The interaction between them generates capacitance value induced changes to collect the activity of objects, the environment, and the user, and captures changes in the individual's activities or the surrounding environment.

13. A system that uses the capacitive sensing principle according to claim 1 to detect user behavior and changes in the external environment, **characterized in that** the item referred to is the shoe sole. The conductive zone of the sole detects the user's gait analysis, and capacitance changes vary due to different surface materials, thereby determining the surface material; Additionally, it can detect the interaction between the shoe and the football, identifying the parts where the sole or upper contacts the sole or upper and exerts force on the soccer ball; When people are inside cars, motorcycles, or bicycles, shoes are replaced by wheels.

14. A system using the capacitive sensing principle according to claim 1 to detect user behavior and changes in the external environment, **characterized in that** the physiological information or posture detected at the same position uses items on the user's body or periphery for further confirmation and correction, including: a capacitive induction system inside the vehicle and sensing the body's clothing, pants, socks, and shoes.

15. According to claim 1, a system using capacitive sensing principles to detect user behavior and changes in the external environment is **characterized in that** the physiological information or posture detected at the same position uses electrodes on the user's skin and peripheral objects for further confirmation and correction. The resulting data is used for analyzing and processing behavioral patterns, especially since the electrodes are on the skin, which serves as a database for correcting the behavior between objects and people.

16. According to claim 14, a system that uses the capacitive sensing principle to detect user behavior and changes in the external environment, **characterized in that** the physiological information or posture detected at the same position uses objects on the user's body or periphery for further confirmation and correction. The sensing of the object corresponds to the capacitive sensing of the bed and pajamas, and the two mutually confirm and calibrate the database.

17. A system that uses the capacitive sensing principle according to claim 1 to detect user behavior and changes in the external environment, **characterized in that** the object is the sole, and the conductive zone of the sole is measured to analyze the user's gait. At the same time, different surface materials cause different capacitance changes, thus knowing the surface material.

18. The system that uses the capacitive sensing principle according to claim 17 to detect user behavior and changes in the external environment, **characterized in that** the sole is replaced by a wheel, measuring wheel movement and changes in materials on the ground; The situations mentioned above where the sole is replaced by wheels include: when the person is inside a car, on a motorcycle, or on a bicycle.

19. A system that uses the capacitive sensing principle according to claim 1 to detect user behavior and changes in the external environment, **characterized in that** the object is the upper and sole of a shoe, measuring the user's gait analysis, its interaction with the football team, and sensing the player's behavior.

20. A system according to claim 1 that uses the principle of capacitive sensing to detect user behavior and changes in the external environment, **characterized in that** the item referred to is flooring, road, lawn, or carpet; In these cases, changes in temperature, pressure, material, and humidity between objects or between people or objects, or between other objects, can cause changes in capacitance.

21. A system that uses the capacitive sensing principle according to claim 9 to detect user behavior and changes in the external environment, **characterized in that** data analysis is used for the formation, representation, modeling, analysis, learning, simulation of individual and group behaviors, as well as understanding the impact, utility, and non-occurrence of behaviors, in order to carry out "behavioral intervention and management."

22. A system that uses the capacitive sensing principle according to claim 9 to detect user behavior and changes in the external environment, **characterized in that** data analysis involves warming up and stretching the muscles throughout the body before exercise, while recalibrating the database data; After exercising, do stretching exercises to re-adjust the items; The items being corrected include: data corrections from the database of clothing, pants, socks, and shoes.

23. A system that uses the capacitive sensing principle according to claim 1 to detect user behavior and changes in the external environment, **characterized in that** when an item detects an increase in the capacitance value of a certain part of the body under the same conditions, but the capacitance value of other parts of the object does not change, it indicates an increase in humidity or temperature in a certain part of the body. However, if the sensed capacitance values of objects in all parts of the body increase or decrease, this indicates a change in the temperature or humidity of the body or environment. At this time, we use the change in capacitance of objects that have not come into contact with people to distinguish them. Non-contact items include: shoe soles, uppers, balls, and the outer surface of helmets. If their conductivity and capacitance increase or decrease, it indicates environmental changes rather than physical changes.

24. A system that uses the capacitive sensing principle according to claim 1 to detect user behavior and changes in the external environment, **characterized in that** the reference point of the item is a reference point where the conductive zone contacts the skin as the reference point, and the resulting capacitance sensing is a value; However, when there is material isolation, the reference point does not directly contact the skin, and the change in capacitive sensing includes the reference point generated by the reference point Changes, so we know that the body parts of the reference site have changed.

25. According to claim 24, a system using the capacitive sensing principle to detect user behavior and changes in the external environment, **characterized in that** the electrode at the reference ground of the object does not contact the skin, so when the location of the sensing area of the object does not change, the measured capacitance value is the change in the position of the reference point. The changes include: when standing still on the knee, the measured value at the knee is 200pf, but when the inside of the pants is covered with clothing, the measured value is 166-175pf. This is due to changes in the reference point of the waistband due to the influence of breathing.

26. A system that uses the capacitive sensing principle according to claim 1 to detect user behavior and changes in the external environment, **characterized in that** the item comprises: the reference point for clothing, pants, and socks is the position of stable contact with the body, including a circle of conductive material wrapped around the back, waist, thigh, calf, sole of the foot, or neck as a reference point; another method is to provide multiple points on the clothing and pants as reference points; Additionally, at each sensing point, there is a reference point in contact with the skin, including: a reference point on the elbow, so when the elbow bends, the value of elbow bending is generated.

27. According to claim 24, a system using capacitive sensing principles to detect user behavior and changes in the external environment, **characterized in that** the reference ground for items is shared by other items as the reference point. If the capacitive sensing value obtained is problematic, a new reference point is needed to be replaced. The signal circuit switches to the new reference point, obtaining a better and more stable signal by changing the reference point, while also knowing the results caused by changes in user behavior.

28. A system using the capacitive sensing principle according to claim 1 to detect user behavior and changes in the external environment, **characterized in that** capacitive sensing analysis combined with the inductance function between the object's electrodes and the user, a 9-axis accelerometer, camera, or GPS positioning system enhances the detection effect of behavior and environmental changes.

29. The system according to claim 1 that uses the capacitive sensing principle to detect user behavior and changes in the external environment, **characterized in that** sensors of the same item detect different physiological and posture changes in the body, including: a capacitive sensor in pajamas that detects breathing as well as sleeping posture and blanket coverings to assess sleep quality; Abdominal breathing suits and pants monitor the user's standing and sitting posture, breathing information, sweating, and respiratory rate variability (RRV).

30. According to claim 1, a system using capacitive sensing principles to detect user behavior and changes in the external environment is **characterized in that** the product is a sock or insole, where only two electrode strips on the left and right that do not touch the skin are used to analyze gait. Because the socks fit closely with the foot, the most accurate gait analysis data is measured. Additionally, if the conductive electrodes are on the insole, there may be a problem where the foot does not contact the insole, and the obtained inductive capacitance value may be delayed, requiring delay correction This delay correction includes: calculating the time from the heel or toe approaching the insole to the contact between the foot and the insole, and the time the heel separates from the shoe. These two separated conductive plates can be divided into multiple segments, each segment independently sensing a capacitor to the foot, which allows for a clearer understanding of the user's foot relationship with the sock or insole and more accurate gait analysis.

31. The system that uses the capacitive sensing principle according to claim 1 to detect user behavior and changes in the external environment, **characterized in that** the item is a shoe, with two conductive materials not in contact on the sole. The conductive material includes silver fabric. Thus, when walking, different capacitance changes occur due to interaction with the ground, resulting in gait analysis. At the same time, different materials, including asphalt, grass, tiles, and carpets, have different measured sensing capacitance values. This is because the dielectric constants of these materials differ, allowing measurement of the environment with the effect of capacitive induction. That is, the sole does not touch the ground surface, but as it gets closer, the measured capacitance increases. This allows for measurement of the distance and changes between the sole and the ground, rather than just the pressure change between the sole and the ground on the foot. The conductive zone of the foot provides more detailed information, and the changes in the ground produce different capacitance values. Changes on the ground include: When there is water on the ground and the ground unevenly rises and falls, the capacitance value changes. The temperature and humidity of the surface vary through spring, summer, autumn, and winter, resulting in different capacitance variations.

32. According to claim 1, a system using capacitive sensing principles to detect user behavior and changes in the external environment, **characterized in that** an object is a ball, the ball has two or more conductive zones, and the force of shoes stepping on or kicking the ball and the body blocking the ball is proportional to the change in the ball's capacitance value; Additionally, multiple conductive zones measure the position of the force, the magnitude and direction of the force, The force generated will cover the distance traveled, and GPS and accelerometers are used to determine the ball's trajectory and direction; The ball is a football. Since the hardness and materials of the net and railing differ, whether or not there are conductive electrodes and signal circuits on the football net can measure the soccer ball entering the net. The soccer ball entering the net includes whether the ball goes into the net, the ball does not go into the net, or the ball touches the fence of the net; When a soccer ball is blocked or caught by a defender, the capacitive sensor signals on the defender's body generate a strong signal. At the same time, each player's clothing, pants, and shoes have conductive zones and signal circuits, allowing them to understand the movement relationships among all personnel on the field.

33. According to claim 1, a system using capacitive sensing principles to detect user behavior and changes in the external environment, **characterized in that** an object is a ball, the ball has two or more conductive zones, the force of the ball hitting the ground when grabbed by hand, and the change in the ball's capacitance value. Multiple conductive zones also detect the position of the force, the magnitude of the force and its direction, and also includes GPs and accelerometers to determine the ball's trajectory and direction. The ball is a basketball, When the basketball's electrodes touch the basketball pad, its capacitance changes significantly. When the basketball touches the metal of the hoop, the controller inside the basketball detects a strong capacitive response. When the basketball enters the net, the capacitance changes but is not an instantaneous signal, because the basketball hits the backboard with a collision force. The net contains conductive materials, causing a noticeable change in capacitance. When skimming the edge or dunking directly, the difference is that during dunking, the hand directly hits the net. The basketball's contact time with the hand is longer than that contact time with the net is shorter. During dunks, the hands touch the hoop, and at the same time, the human movement differs greatly. For edge balls, the body smoothly sends the ball into the hoop. The basketball board also has conductive zones and controllers, and the reactions of the board and the controller are synchronized.

34. According to claim 1, a system using capacitive sensing principles to detect user behavior and changes in the external environment, **characterized in that** when items such as clothing, pants, socks, baseballs, bats, and baseballs have conductive zones and control systems, the conductive zone in the sole can be measured to analyze the user's gait, and capacitance changes vary due to different surface materials. The measured surface material shows that the baseballer's feet do not leave the ground during the sliding motion, but the body's center of gravity is offset. The capacitance between the sole and the ground decreases, and the entire game process inside the stadium is recorded and analyzed.

35. A system that uses the capacitive sensing principle according to claim 1 to detect user behavior and changes in the external environment, **characterized in that** the object is the skin electrode, which uses the capacitance value generated by the skin electrode and electrodes at the same position to adjust or correct the position and database of items on the body, including: clothes, pants, socks, gloves, hats, masks, ear muffs, shoes, skirts, prosthetics, dislimbs, belts, belts, backpacks, waist bags, glasses, hiking bags, helmets, and headgear for the metaverse; Better behavioral patterns and analyses are derived from the interaction between electrodes on the skin of objects.

36. The system that uses the capacitive sensing principle according to claim 35 to detect user behavior and changes in the external environment, **characterized in that** the skin electrodes themselves have control circuits to detect changes in the capacitance of clothing. The skin electrodes are expanded or contracted when the body bends, expand or contract during breathing, external environmental pressure or tension, ambient temperature or humidity, and body humidity or temperature all produce changes in capacitance, thereby measuring capacitance changes at different parts of the body. At the same time, changes in capacitance between positions are measured, including: left leg raised over right leg, left hand placed in front of chest, thereby detecting physiological information such as breathing, posture, humidity, temperature, and analyzing and processing behavioral patterns.

37. According to claim 1, a system that uses the capacitor sensing principle to detect user behavior and changes in the external environment, **characterized in that** the item is a tire of a car, bicycle, and motorcycle. The tire has induction electrodes and control circuits to detect the condition and changes of the tire, and also obtains the external ground conditions. When one of the four tires of the car leaks air, the measured capacitance value of that tire differs greatly from the original value. Additionally, the capacitance sensing values of the other three tires are also different, serving as a tire pressure detector. Each tire touches different surfaces, so understanding the ground conditions helps adjust driving conditions to ensure safety. When the front wheel passes through a dent, the force of the car over the dent is significant. The result of the rear wheel passing the hole is recorded for next time in the same situation. When the tire detects a difference in ground material, the driving method is adjusted-gravel, asphalt, or rainy roads-the friction coefficient also varies, so the driving method should also be adjusted. The interaction between the tire and the driver is used to assess the driver's physical and mental state; The pressure capacitance sensitivity of tires on uphill and downhill sections also differs. At the start of an uphill slope, the front wheel's capacitance increases first; when downhill, the front wheel's capacitance decreases. The double yellow solid lines on the ground divide the road into two-way lanes, prohibiting vehicles from crossing and not making U-turns. When the dielectric constant of the double yellow solid lines differs and the tires are conductive, the tire will record contact and notify the driver.

38. A system that uses the capacitive sensing principle according to claim 1 to detect user behavior and changes in the external environment, **characterized in that** when all electrode sheets of the item interact with the user or other items, if the capacitance value between the electrodes at the reference point and the body or other objects is unstable, a new reference electrode is selected as the reference point.

39. A system that uses the capacitive sensing principle according to claim 1 to detect user behavior and changes in the external environment, **characterized in that** the items include personal items: helmet, safety helmet, hat, swim cap, clothing, pants, glasses, headscarf, mask, watch, wristband, gloves, socks, bed sheet, pillow, insole, earphones, ring, nail patches, and the personal item has a conductive zone with incoming capacitors; The items also include non-close-fitting items: shoe soles, uppers, backpacks, cars, basketball hoops, soccer hoops, floors, tires, balls, chairs, beds, and electrodes on human skin. This creates a database to display internal or external forces at different positions and joints throughout the body, with corresponding values for capacitive induction; Changes in the motion capacitance of other items, changes in environmental capacitance; A computing system that obtains databases for AI operations.

40. A system using the capacitive sensing principle according to claim 35 to detect user behavior and changes in the external environment, **characterized in that** the skin electrodes are used to measure physiological information, which includes: electrocardiogram, electromyography, brainwaves, body fat, and breathing. The transmission line is used for wireless transmission to the receiver, which includes: a mobile phone; Close-fitting and non-close-fitting items include: clothes, pants, socks, shoes, hats, masks. Conductive electrodes on the skin include: totems, paintings, tattoos, or electrode pads applied to the skin. As long as there are wires or electrodes at the same position on close-fitting and non-close-fitting items, they receive capacitive induction from the skin electrode. The wires or electrodes do not directly contact the skin electrodes, meaning the skin electrodes are covered by an insulating layer or non-conductive material. or placing conductive wires or electrodes on close-fitting and non-close-fitting items on the side of the fabric that is not close to the skin, allowing the fabric sensing circuit to accurately obtain various physiological functions and behavioral information from the human body.

41. The system that uses the capacitive sensing principle according to claim 1 to detect user behavior and changes in the external environment, **characterized in that** the item refers to the vehicle, the driver, and the items on the body, including: steering wheel, seat, seatback, headrest rest, foot brake, seat belt, accelerator, and doors. Conductive electrodes are present at all parts of the item. Under such a system, the driver's behavior, mental state, and breathing can be measured.

42. A system that uses the capacitive sensing principle according to claim 41 to detect user behavior and changes in the external environment, **characterized in that** when the driver wears capacitive sensing clothing and pants, the results measured by the vehicle and the items in the vehicle are mutually corrected, or the correction function is enhanced by a camera.

43. A system that uses the capacitive sensing principle according to claim 1 to detect user behavior and changes in the external environment, **characterized in that** two different items have the same measured object, and the capacitance values of the two items mutually sense each other, calibrating the information while detecting the information.

44. A system using the capacitive sensing principle according to claim 1 to detect user behavior and changes in the external environment, **characterized in that** a capacitive sensor is generated between at least one conductive region of an item and the body, between another object or the environment, or between the skin conductive zone and the object or between the environment, or between the conductive zone of the object and the conductive zone electrodes of the body, and a capacitive sensor generated in the conductive zones of both the item and the other articles, The capacitance values measured by these capacitive sensors build a database.

45. A system using the capacitive sensing principle according to claim 1 to detect user behavior and changes in the external environment, **characterized in that** a capacitive sensor is generated between at least one conductive region of an item and the body, between another object or the environment, or between the skin conductive zone and the object or between the environment, or between the conductive zone of the object and the conductive zone electrodes of the body, and a capacitive sensor generated in the conductive zones of both the item and the other articles, The capacitance values measured by these capacitive sensors build a database.

46. The method for detecting user behavior and changes in the external environment using the capacitive sensing principle according to claim 45, **characterized in that** it includes a computer system connected to a capacitive sensor and executes multidimensional learning routines in response. The data capacitive sensor reflects the habits, activities, and/or positional changes of the behavior of individuals and the sequence in which they occur in the individual, constructing one or more personalized behavioral dynamic state models and learning routines for transitions between different states.

47. The method of using capacitive sensing principles according to claim 46 to detect user behavior and changes in the external environment, **characterized in that** the learning routine also develops one or more customized multidimensional prediction models for the individual, and uses these models to predict possible future behaviors. The notification system issues notifications, warns of behavior, changes in activities associated with unsafe or undesirable outcomes based on predictions, and transmits notifications or warnings to the individual or associated recipients.

48. The method for detecting user behavior and changes in the external environment using the capacitive sensing principle according to claim 45, **characterized in that** the external environment includes changes in temperature, humidity, material on the ground, or external force intervention.

49. The method for detecting user behavior and changes in the external environment using the capacitor sensing principle according to claim 45, **characterized in that** objects and the body, and items and objects directly or indirectly, form a capacitor between them.

50. The method for detecting user behavior and changes in the external environment using the capacitive sensing principle according to claim 45, **characterized in that** the item includes items in contact with the human body, such as: clothes, hats, pants, masks, socks, shoes, bed sheets, pillows, gloves, glasses, watches, wristbands, backpacks, leather bags, suitcases, baskets, handbags, skis, ice skates, surfboards, sports equipment, toothbrushes, cigarettes, pens, computers, mobile phones, cars, balls, tires, steering wheels, canes, Tablecloths, chairs, carpets, slippers, insoles, seat belts; or artificial products, including robots, prosthetics, prosthetic eyes, and ears.

51. The method according to claim 45 for detecting user behavior and changes in the external environment using the capacitive sensing principle, **characterized in that** the item and the body or the object provide a circuit to detect capacitance changes with other items.

52. A method for detecting user behavior and changes in the external environment using the capacitive sensing principle according to claim 45, **characterized in that** the conductive zone of the item or body includes: conductive electrodes directly on the surface of the body skin, inside and outside the skin, or only inside the skin; Items that come into direct or indirect contact with the skin, or those with capacitive sensing between the body and the human body; The item is worn by the user, but it does not have capacitive sensing on the skin; instead, it does have capacitive sensing with the external environment; The object and person are not wearable devices but independent cases; the electrodes of the object have capacitive sensing functions between the wearable item or skin; The object has no interaction with the person, but rather a capacitive induction between two objects that have not touched the body; Interaction between people causes changes in capacitance; Capacitive induction in the electrode zone on floors or carpets.

53. According to claim 45, a method for detecting user behavior and changes in the external environment using capacitive sensing principles, **characterized in that** everyone has a wearable item. Before exercise, warm-up stretches the muscles of the entire body, dynamically stretches to activate the whole body's muscles, while recalibrating the original standard database data between the object and the person, and then performs behavior detection between the wearable item and the person; The items include: clothes, pants, socks, and shoes.

54. The method for detecting user behavior and changes in the external environment using the capacitive sensing principle according to claim 45, **characterized in that** different objects detect capacitive sensing data obtained by the user at the same time, enabling more comprehensive detection and processing of behavior patterns, including: wearing clothes with controllers detecting posture changes, and simultaneously measuring human posture on the chair controller, making behavior pattern analysis more accurate and obtaining more information.

55. The method for detecting user behavior and changes in the external environment using the capacitive sensing principle according to claim 45, **characterized in that** by utilizing objects in different body positions, the model is extracted from the characteristics of capacitance data changes in each item's capacitance value data and the external environment, and then the extracted feature data is used to perform movements between the human body and the object or between objects.

56. The method for detecting user behavior and changes in the external environment using the capacitive sensing principle according to claim 45, **characterized in that** the system detects between the user, objects on their body, or nearby objects, or objects and the environment that are not approaching. The interaction between them generates capacitance value induced changes to collect the activity, and to capture individual activities or changes in the surrounding environment.

57. According to claim 45, a method for detecting user behavior and changes in the external environment using capacitive sensing principles, **characterized in that** the referred item is the shoe sole, the conductive zone of the sole is measured to analyze the user's gait, and capacitance changes vary due to different surface materials, thereby determining the surface material; Additionally, it can detect the interaction between the shoe and the football, identifying the parts where the sole or upper contacts the sole or upper and exerts force on the soccer ball; When people are inside cars, motorcycles, or bicycles, shoes are replaced by wheels.

58. The method for detecting user behavior and changes in the external environment using the capacitive sensing principle according to claim 45, **characterized in that** the physiological information or posture detected at the same position uses objects on the user's body or periphery for further confirmation and correction, including: a capacitive sensing system inside the vehicle and sensing clothing, pants, socks, and shoes.

59. According to claim 45, the method for detecting user behavior and changes in the external environment using the capacitive sensing principle is **characterized in that** the physiological information or posture detected at the same location uses electrodes on the user's skin and peripheral objects for further confirmation and correction. The resulting data is used for analyzing and processing behavioral patterns, especially since the electrodes are on the skin, which is used to calibrate the behavior database between objects and people.

60. According to claim 58, a method for detecting user behavior and changes in the external environment using the principle of capacitive sensing, **characterized in that** the physiological information or posture detected at the same position is further confirmed and corrected using objects on the user's body or periphery. The sensing of the object is that of the bed and the capacitive sensing of pajamas corresponds to each other, and the two mutually confirm and correct the database.

61. According to claim 45, the method for detecting user behavior and changes in the external environment using capacitive sensing principles, **characterized in that** the object is the sole, and the conductive zone of the sole is measured to analyze the user's gait. At the same time, different surface materials cause different capacitance changes, thus knowing the surface material.

62. The method for detecting user behavior and changes in the external environment using the capacitive sensing principle according to claim 61, **characterized in that** the sole is replaced by a wheel, measuring the movement of the wheel and changes in the material on the ground; The situations mentioned above where the sole is replaced by wheels include: when the person is inside a car, on a motorcycle, or on a bicycle.

63. According to claim 45, a method for detecting user behavior and changes in the external environment using the principle of capacitive sensing, **characterized in that** the object is the upper and sole of a shoe, measuring the user's gait analysis, its interaction with the football team, and sensing the player's behavior.

64. he method for detecting user behavior and changes in the external environment using the capacitive sensing principle according to claim 45, **characterized in that** the object referred to is the floor, road, grass, or carpet; In these cases, changes in temperature, pressure, material, and humidity between objects or between people or objects, or between other objects, can cause changes in capacitance.

65. The method of using capacitive sensing principles according to claim 54 to detect user behavior and changes in the external environment is **characterized in that** data analysis is used to form, represent, compute, model, analyze, learn, simulate individual and group behaviors, and to understand the impact, utility, and non-occurrence behaviors of behavior, in order to carry out "behavioral intervention and management."

66. The method for detecting user behavior and changes in the external environment using the capacitive sensing principle according to claim 54, **characterized in that** data analysis involves warming up and stretching the muscles throughout the body before exercise, while recalibrating the database data; After exercising, do stretching exercises to re-adjust the items; The items being corrected include: data corrections from the database of clothing, pants, socks, and shoes.

67. The method for detecting user behavior and changes in the external environment using the capacitive sensing principle according to claim 45, **characterized in that** when an item detects an increase in the capacitance value of a certain part of the body under the same conditions, but the capacitance value of the object in other parts does not change, it indicates an increase in the humidity or temperature of a certain part of the body. However, if the sensed capacitance value of objects in all parts of the body increases or decreases, this indicates a change in the temperature or humidity of the body or environment. At this time, we use the change in capacitance of objects that have not come into contact with people to distinguish them. Non-contact items include: shoe soles, uppers, balls, and the outer surface of helmets. If their conductivity and capacitance increase or decrease, it indicates environmental changes rather than physical changes.

68. The method for detecting user behavior and changes in the external environment using the capacitive sensing principle according to claim 45, **characterized in that** the reference point of the item is the conductive zone in contact with the skin as the reference point, and the resulting capacitance sensing is a value; However, when material is used for isolation, the reference point does not directly contact the skin. At this point, changes in capacitive sensing include changes caused by the reference point, so it is known that the reference point has changed in body parts.

69. The method for detecting user behavior and changes in the external environment using the capacitive sensing principle according to claim 68, **characterized in that** the electrode at the reference ground of the object does not contact the skin, so when the location of the sensing area of the object does not change, the measured capacitance value is the change in the position of the reference point, including: the number of knees measured while standing still The value is 200pf, but when the pants are inside, the measurement is 166-175pf, which is due to changes in the waistband reference area due to breathing effects.

70. The method for detecting user behavior and changes in the external environment using the principle of capacitive sensing according to claim 45, **characterized in that** the item comprises: the reference point for clothing, pants, and socks is the position of stable contact with the body, including a circle of conductive material around the back, waist, thigh, calf, soles of the feet, or neck as reference points; another method is to provide multiple points on the clothing and pants as reference points; Additionally, at each sensing point, there is a reference point in contact with the skin, including: a reference point on the elbow, so when the elbow bends, the value of elbow bending is generated.

71. The method for detecting user behavior and changes in the external environment using the capacitive sensing principle according to claim 68 is **characterized in that** the reference point of the item is shared by other items as the reference point. If the capacitive sensing value obtained is problematic, a new reference point is needed to switch to the new reference point. By switching the reference point, a better and more stable signal can be obtained, while also knowing the results caused by changes in user behavior.

72. The method for detecting user behavior and changes in the external environment using the capacitive sensing principle according to claim 45, **characterized in that** capacitive sensing analysis combined with the inductance function between the electrodes of an object and the user, a 9-axis accelerometer, camera, or GPS positioning system enhances the detection effect of behavior and environmental changes.

73. According to claim 45, a method for detecting user behavior and changes in the external environment using a capacitive sensing principle, **characterized in that** sensors of the same item detect changes in different physiological and posture of the body, including: a capacitive sensor in pajamas detects breathing as well as sleeping posture and blanket use to assess sleep quality; abdominal breathing gowns and breathing pants detect the user's standing and sitting posture, breathing information, sweating, and respiratory rate variability (RRV).

74. According to claim 45, a method for detecting user behavior and changes in the external environment using a capacitive sensing principle is **characterized in that** the item is a sock or insole, where only two electrode strips on the left and right that do not touch the skin are used for gait analysis. Since the socks fit closely with the foot, the most accurate gait analysis data is measured. Additionally, if the conductive electrodes are on the insole, there may be a problem that the foot does not contact the insole, and the obtained inductive capacitance value may also be delayed. Delay correction is required, including: the time from the heel or toe approaching the insole to the contact between the foot and the insole, and the time the heel separates from the shoe. These two separated conductive plates are divided into multiple segments, each independently sensing the foot capacitor, which allows for a clearer understanding of the user's foot relationship with the sock or insole and more accurate gait analysis.

75. The method for detecting user behavior and changes in the external environment using the capacitive sensing principle according to claim 45, **characterized in that** the item referred to is a shoe, with two conductive materials not in contact on the soles. The conductive materials include silver fabric. Thus, when walking, different capacitance changes occur due to interaction with the ground, resulting in gait analysis. Different materials, including asphalt, grass, tiles, and carpets, have different measured sensing capacitance values This is because the dielectric constants of these materials are different. This allows us to measure the environment. Similarly, there is still a capacitive induction effect. That is, the sole does not touch the ground surface, but as it gets closer, the measured capacitance increases. This allows us to measure the distance and changes between the sole and the ground, rather than just the pressure change between the sole and the ground when stepping on the ground. The conductive zone of the foot provides more detailed information, and the capacitance generated by changes on the ground varies. Changes on the ground include: : When there is water on the ground and the ground unevenly rises and falls, the capacitance value will differ. The temperature and humidity of the surface in spring, summer, autumn, and winter will also vary, resulting in different capacitance variations.

76. The method for detecting user behavior and changes in the external environment using the capacitive sensing principle according to claim 45, **characterized in that** an object is a ball, the ball has two or more conductive zones, and the force of shoes stepping on the ball, shoe kicking, and the body's blocking force is proportional to the change in the ball's capacitance value; Additionally, multiple conductive zones measure the position of the force, the magnitude and direction of the force, and the distance the force will travel. GPS and accelerometers are also used to determine the ball's trajectory and direction; The ball is a football. Because the hardness and materials of the net and railing differ, whether or not there are conductive electrodes and signal circuits on the football net, the ball entering the net can be measured. The ball entering the net includes the ball entering the net Net, soccer ball not in the net, or the soccer ball hitting the railing of the net; When a soccer ball is blocked or caught by a defender, the capacitive sensor signals on the defender's body generate a strong signal. At the same time, each player's clothing, pants, and shoes have conductive zones and signal circuits, allowing them to understand the movement relationships among all personnel on the field.

77. The method for detecting user behavior and changes in the external environment using the capacitive sensing principle according to claim 45, **characterized in that** the object is a ball, the ball has two or more conductive zones, the ball is grabbed by hand, and the force the ball hits the ground is proportional to the change in the ball's capacitance value. Multiple conductive zones also measure the position of the force, the magnitude of the force and its direction, and simultaneously includes GPS and accelerometers to determine the ball's trajectory and direction. The ball is a basketball, When the basketball's electrodes touch the basketball pad, its capacitance changes significantly. When the basketball touches the metal of the hoop, the controller inside the basketball detects a strong capacitive response. When the basketball enters the net, the capacitance changes but is not an instantaneous signal, because the basketball hits the backboard with a collision force. The net contains conductive materials, causing a noticeable change in capacitance. When skimming the edge or dunking directly, the difference is that during dunking, the hand directly hits the net. The basketball's contact time with the hand is longer than that contact time with the net is shorter. During dunks, the hands touch the hoop, and at the same time, the human movement differs greatly. For edge balls, the body smoothly sends the ball into the hoop. The basketball board also has conductive zones and controllers, and the reactions of the board and the controller are synchronized.

78. According to claim 45, a method for detecting user behavior and changes in the external environment using the principle of capacitive sensing, **characterized in that** when an item such as clothing, pants, baseball, bat, or base bag has a conductive zone and control system, measuring the conductive zone of the sole allows for gait analysis, and the capacitance changes vary due to different surface materials. The surface material is measured, and the baseball's sliding motion does not leave the ground, but the body's center of gravity shifts, causing the capacitance value between the sole and the ground to decrease. The entire game process inside the stadium is recorded and analyzed.

79. According to claim 45, a method for detecting user behavior and changes in the external environment using the principle of capacitive sensing, **characterized in that** when an item such as clothing, pants, baseball, bat, or base bag has a conductive zone and control system, measuring the conductive zone of the sole allows for gait analysis, and the capacitance changes vary due to different surface materials. The surface material is measured, and the baseball's sliding motion does not leave the ground, but the body's center of gravity shifts, causing the capacitance value between the sole and the ground to decrease. The entire game process inside the stadium is recorded and analyzed.

80. The method for detecting user behavior and changes in the external environment according to the principle of capacitive sensing according to claim 79, **characterized in that** the skin electrodes themselves have control circuits to detect changes in the capacitance of clothing. The skin electrodes are expanded or contracted when the body bends, expand or contract during breathing, external environmental pressure or tension, ambient temperature or humidity, and body humidity or temperature changes cause changes in capacitance. This allows measurement of capacitance changes at different parts of the body, as well as capacitance changes between positions, including: left leg raised over right leg, left hand placed in front of chest, thereby measuring physiological information such as breathing, posture, humidity, and analyzing behavioral patterns.

81. he method for detecting user behavior and changes in the external environment using the capacitor sensing principle according to claim 45, **characterized in that** the tires of automobiles, bicycles, and motorcycles are equipped with induction electrodes and control circuits to detect the condition and changes of the tires, and also obtain the external ground conditions. When one of the four tires of a car leaks air, the measured capacitance value of that tire differs greatly from the original value. Additionally, the capacitance sensing values of the other three tires also differ, serving as a tire pressure detector. Each tire touches different surfaces, so understanding the ground conditions helps adjust driving conditions to ensure safety. When the front wheel passes through a dent, the force of the car over the dent is significant. The result of the rear wheel passing the hole is recorded for next time in the same situation. When the tire detects a difference in ground material, the driving method is adjusted-gravel, asphalt, or rainy roads-the friction coefficient also varies, so the driving method should also be adjusted. The interaction between the tire and the driver is used to assess the driver's physical and mental state; The pressure capacitance of tires varies between uphill and downhill sections. At the start of an uphill slope, the front wheel's capacitance increases first; when downhill, the front wheel's capacitance decreases. The double yellow solid lines on the ground divide the road into two-way lanes, prohibiting vehicles from crossing and not making U-turns. When the dielectric constant of the double yellow solid lines is different and the material is conductive, the tire contacts the driver and records the information.

82. The method for detecting user behavior and changes in the external environment using the capacitive sensing principle according to claim 45, **characterized in that** when all electrode sheets of the item interact with the user or other objects, if the capacitance value between the electrodes at the reference point and the body or other objects is unstable, a new reference electrode is selected as the reference point.

83. The method for detecting user behavior and changes in the external environment using the capacitive sensing principle according to claim 45, **characterized in that** the items include personal items: helmet, safety helmet, hat, swim cap, clothing, pants, glasses, headscarf, mask, watch, wristband, gloves, socks, bed sheet, pillow, insole, earphones, ring, nail patches, and the personal item has a conductive zone to measure capacitance; The items also include non-close-fitting items: shoe soles, uppers, backpacks, cars, basketball hoops, soccer hoops, floors, tires, balls, chairs, beds, and electrodes on human skin. This creates a database to display internal or external forces at different positions and joints throughout the body, with corresponding values for capacitive induction; Changes in the motion capacitance of other items, changes in environmental capacitance; A computing system that obtains databases for AI operations.

84. According to claim 79, the method for detecting user behavior and changes in the external environment using capacitive sensing principles, **characterized in that** the skin electrodes are used to measure physiological information, which includes: electrocardiogram, electromyography, brainwave, body fat, and respiration. The transmission line is used for wireless transmission to the receiver, which includes: a mobile phone; Close-fitting and non-close-fitting items include: clothes, pants, socks, shoes, hats, masks. Conductive electrodes on the skin include: totems, paintings, tattoos, or electrode pads applied to the skin. As long as there are wires or electrodes at the same position on close-fitting and non-close-fitting items, they receive capacitive induction from the skin electrode. The wires or electrodes do not directly contact the skin electrodes, meaning the skin electrodes are covered by an insulating layer or non-conductive material, or placing conductive wires or electrodes on close-fitting and non-close-fitting items on the side of the fabric that is not close to the skin, allowing the fabric sensing circuit to accurately obtain various physiological functions and behavioral information from the human body.

85. The method for detecting user behavior and changes in the external environment using the capacitive sensing principle according to claim 45, **characterized in that** the item refers to the vehicle, the driver, and the objects on the body, including: the steering wheel, seat, seatback, headrest, foot brake, seat belt, accelerator, and doors. The items are equipped with conductive electrodes, and under such a system, the driver's behavior, mental state, and breathing are measured.

86. The method for detecting user behavior and changes in the external environment using the capacitive sensing principle according to claim 85, **characterized in that** when the driver wears capacitive sensing clothing and pants, the results measured by the vehicle and the measured items in the vehicle are mutually corrected, or the correction function is enhanced by a camera.

87. The method for detecting user behavior and changes in the external environment using the capacitive sensing principle according to claim 45, **characterized in that** two different items have the same measured object, and the capacitance values of the two items mutually sense each other, calibrating while detecting information.

88. The method for detecting user behavior and changes in the external environment using the capacitive sensing principle according to claim 45, **characterized in that** a capacitive sensor is generated between at least one conductive region of an item and the body, between another object or the environment, or between the skin conductive zone and the object or between the environment, or between the conductive zone of the object and the conductive zone electrode of the object, or a capacitive sensor generated between the conductive zone of the item and the conductive zone electrodes of the body, and a capacitive sensor generated in the conductive zone of both the item and another article, The capacitance values measured by these capacitive sensors build a database.

89. The method for detecting user behavior and changes in the external environment using the capacitive sensing principle according to claim 45, **characterized in that** it uses the capacitive value of an object to analyze gait to predict changes in the bending angle of the knee or hip joint, or to use the inductive capacitance sensed by the object at the knee or hip joint to predict the posture or condition of the foot.

90. The method for detecting user behavior and changes in the external environment using the capacitive sensing principle according to claim 45, **characterized in that** it uses the capacitance value of an object to analyze gait by an object to calibrate the capacitance database data of items sensing the knee or hip joint, or to use the induced capacitance value value sensed by the object at the knee or hip joint to calibrate the data in the capacitance value database sensed by the object in the foot.
